# EUROPEAN PATENT SPECIFICATION

(11) **EP 4 135 083 B1**
(45) Date of publication and mention of the grant of the patent: **17.01.2024**
(21) Application number: 22188507.2
(22) Date of filing: 03.08.2022
(51) Int. Cl.: H01M 10/04

(54) **METHOD FOR CONVEYING AN ELECTRODE STRIP FOR THE PRODUCTION OF ELECTRICAL ENERGY STORAGE DEVICES AND RELATED MACHINE**
VERFAHREN ZUM FÖRDERN EINES ELEKTRODENSTREIFENS ZUR HERSTELLUNG VON ELEKTRISCHEN ENERGIESPEICHERN UND ZUGEHÖRIGE MASCHINE
PROCÉDÉ DE TRANSPORT D'UNE BANDE D'ÉLECTRODES POUR LA PRODUCTION DE DISPOSITIFS DE STOCKAGE D'ÉNERGIE ÉLECTRIQUE ET MACHINE ASSOCIÉE

(30) Priority: 09.08.2021 IT 202100021578
(43) Date of publication of application: 15.02.2023
(73) Proprietor: Manz Italy S.r.l., 40037 Sasso Marconi (BO) (IT)
(72) Inventor: ALDROVANDI, Lorenzo, 40037 Sasso Marconi (BO) (IT); ALONGI, Pasqualino, 40037 Sasso Marconi (BO) (IT); CIRINO, Sergio, 40037 Sasso Marconi (BO) (IT)
(74) Representative: Studio Torta S.p.A.

(56) References cited:
- EP-B1- 2 648 248
- KR-B1- 101 917 571

## Description

### CROSS-REFERENCE TO RELATED APPLICATIONS

This patent application claims priority from Italian patent application no. 102021000021578 filed on August 9, 2021.

### TECHNICAL FIELD

The present invention relates to a method for conveying an electrode strip for the production of electrical energy storage devices and to a related machine.

In particular, the present invention relates to a method for cutting and conveying an electrode strip for the production of electrical energy storage devices, and to a corresponding automatic machine for the production of said electrical energy storage devices.

In particular, the present invention is advantageously, but not exclusively, applied to the production of rechargeable batteries, more in particular to the production of planar batteries, for example in metal can or enveloped (commonly called pouch), to which the following description will explicitly refer without thereby losing generality.

### STATE OF THE ART

Automatic machines for the production of electrical energy storage devices are known, and in particular rechargeable batteries or capacitors. EP2648248 discloses for example a method and machine for conveying an electrode strip for the production of electrical storage devices on a roller.

Rechargeable batteries usually comprise two layers of electrode (cathode and anode) and at least two layers of separator superimposed on each other and alternated according to an electrode-separator-electrode-separator scheme. In general, rechargeable batteries are cylindrical or planar.

The automatic machines known for the production of cylindrical batteries feed and convey electrode strips and separator strips along different feeding paths which all converge towards a rotating winding unit, which is configured to retain and wind, about an elongated-shaped support, the electrode strips and the separator strips superimposed on each other according to said electrode-separator-electrode-separator scheme, so as to form a cylindrical winding.

The automatic machines known for the production of planar batteries feed and convey electrode strips and separator strips along different feeding paths which all converge towards a lamination unit, inside which the strips are laminated together so as to be superimposed according to the aforementioned electrode-separator-electrode-separator scheme. If necessary, during the lamination, the electrode and separator strips are arranged between two further protection layers, which are also strip-shaped. Such protection layers are configured to protect the electrode and separator strips inside the lamination unit and are usually removed at the exit from the latter.

More specifically, the automatic machines for the production of planar batteries comprise a feeding assembly provided with as many reels as are the electrode strips and the separator strips for feeding and conveying the electrode strips and the separator strips along the respective feeding paths and, for each electrode strip, and thus for each electrode (cathode and anode) of the battery to be produced, a cutting and conveying apparatus adapted to singularize the electrode strip, i.e. to sequentially cut the electrode strip at respective transverse cutting sections, so as to obtain strip portions, known as plates or blanks, defining the electrodes of each of the cells that will subsequently compose the planar battery. The cut strip portions are fed to a pair of input rollers of the lamination unit, in a synchronous manner with the separator strips.

Downstream of the lamination unit, in some cases, the multilayer strip composed of the two electrode strips cut in subsequent portions and of the two separator strips still continuous, is cut transversely so as to obtain a sequence of planar cells separated from each other which will be subsequently stacked and boxed or enveloped so as to obtain a planar battery. In other cases, instead, the multilayer strip is wound about a flat pin so as to superimpose with precision the electrode strip portions forming a planar winding.

Normally, the cutting and conveying apparatus comprises a gripping assembly and a cutting assembly. The electrode strip is conveyed along a portion of the relative feeding path up to the gripping assembly which is linearly movable with reciprocating motion parallel to the electrode strip and comprises two grippers arranged on opposite sides of the electrode strip which close retaining the strip, once the linear speed of the electrode strip has been reached by means of the reciprocating motion. Once the grippers have gripped the electrode strip, the cutting assembly, comprising a blade member which is too movable with reciprocating motion integrally with the gripping assembly, cuts the electrode strip upstream of the gripping assembly with respect to the advancement direction of the strip.

In particular, the aforementioned cutting and conveying apparatus comprises a slide which carries the gripping assembly and the cutting assembly and is linearly and cyclically movable with reciprocating motion between a retracted position, spaced from the lamination unit, and an advanced position, close to the lamination unit for feeding to the latter one electrode strip portion at a time. Between these two positions, the apparatus reaches the linear advancement speed of the electrode strip so as to grip it and cut it without causing undesired tensioning or stretching therein.

Once the cutting of the electrode strip has been completed, the cutting and conveying apparatus completes its linear advancement motion towards the advanced position, slowing down and feeding (or "delivering") the electrode strip portion that has just been cut to the input rollers of the lamination unit.

Usually, however, the reels of electrode are formed by a metal core made of aluminum or copper partially covered by a coating of known type and not further specifically described, but mainly formed by strongly compressed powders (for example graphite for the cathode) . Because of the strong compressions and the intrinsic errors in the production of the reels, the same usually have imperfections (for example an accentuated camber). For these reasons, over the years systems have been developed known as "strip guide", which however are able to compensate for the imperfections only coarsely, focusing on the compensation of the average of the errors present on the reels (or generated by some misalignment present in the machine). Therefore, although the average value of the error is reduced by using such apparatuses, the same is not accurately compensated for, disregarding undesired oscillations of the error (for example around the average value) which worsen the quality of the battery, as they cause misalignments in the superimposition of the electrodes.

Furthermore, the linear movement of the slide of the cutting and conveying apparatus is carried out by means of an electric linear motor, in particular of brushless type, which is subject to extreme accelerations in the case of high production speeds. Therefore, also due to the high movement speeds of the slide of the cutting and conveying apparatus, the misalignments between the two electrode strips, for example caused by the aforementioned errors or to the tolerances (or to the camber or to any other error caused in the production step thereof or to the mounting of the support rollers of the automatic machine along the conveying paths) of the reels of electrode strip, entail superimposition errors between the electrodes of a same cell, i.e. linear or angular deviations (rotations) between two electrodes that should preferably maximize the facing surface. Such deviations entail a loss of quality and thus of performance of the battery. Furthermore, such deviations, substantially random in the case where the average of the error is already compensated for by a strip guide system, are also cause of some jams or machine stops that at least partially slow down the production and lower the efficiency of the automatic machine.

### OBJECT AND SUMMARY OF THE INVENTION

The object of the present invention is to provide a method for conveying an electrode strip for the production of electrical energy storage devices and a related machine, which are at least partially exempt from the above-described drawbacks and, at the same time, are easy and cost-effective to embody.

In accordance with the present invention, a method for conveying an electrode strip for the production of electrical energy storage devices and a related machine are provided.

The claims describe preferred embodiments of the present invention forming integral part of the present description.

### BRIEF DESCRIPTION OF THE DRAWINGS

In order to better understand the present invention, a preferred embodiment is now described, by way of mere non-limiting example and with reference to the accompanying drawings, wherein:
- Figure 1 is a schematic side view, with parts removed for clarity, of part of an automatic machine for the production of electrical energy storage devices manufactured according to the present invention;
- Figures 2 to 4 are schematic side views, on an enlarged scale and with parts removed for clarity, of two cutting and conveying apparatuses of the automatic machine of Figure 1 during three different and subsequent operating conditions;

- Figure 5 is a top schematic view, on an enlarged scale and with parts removed for clarity, of a detail of one of the apparatuses of Figures 2 to 4;
- Figure 6 is a perspective view, on an enlarged scale and with parts removed for clarity, of part of one of the apparatuses of Figures 2 to 4;
- Figures 7 and 8 illustrate in a perspective view, on an enlarged scale and with parts removed for clarity, a component of one of the apparatuses of Figures 2 to 4 from two distinct points of view;
- Figure 9 illustrates in a perspective view, on an enlarged scale and with parts removed for clarity, an alternative embodiment of the component of Figures 7 and 8;
- Figure 10 schematically illustrates an exploded view of a monocell for an electrical energy storage device produced starting from the machine of Figure 1;
- Figure 11 illustrates the monocell of Figure 10 as produced in the absence of positioning errors of the parts thereof;
- Figures 12 and 13 illustrate the monocell of Figure 11 in the presence of positioning errors;
- Figure 14 illustrates an architecture scheme of an artificial intelligence algorithm implemented by a control unit of the machine of Figure 1; and
- Figures 15 and 16 illustrate a part of the architecture scheme of part of Figure 14 according to two different examples of use.

### DETAILED DESCRIPTION

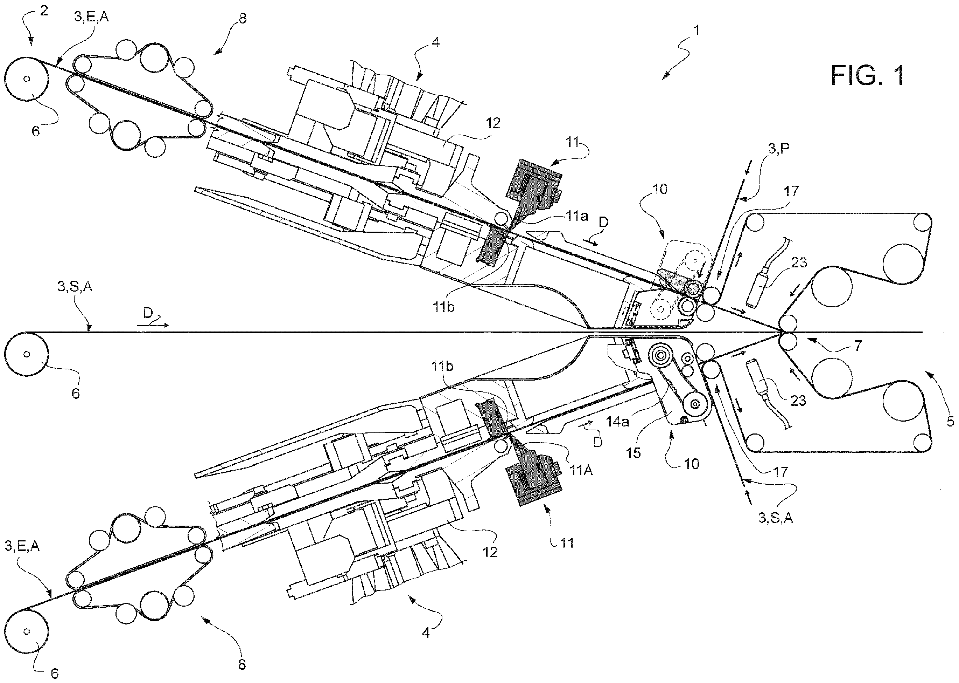

In Figure 1, reference numeral 1 generally indicates, as a whole, an automatic machine for the production of electrical energy storage devices, in particular rechargeable batteries, more specifically planar rechargeable batteries enveloped or in metal can.

The machine 1 comprises a feeding unit 2 for feeding at least one strip 3 of a material for the production of the electrical energy storage devices along a respective feeding path A and in an advancement direction D, at least one cutting and conveying apparatus 4 for cutting and conveying said at least one strip 3 arranged downstream of the feeding unit 2 with respect to the advancement direction D, a lamination unit 5 arranged downstream of the cutting and conveying apparatus 4, still with respect to the advancement direction D, and configured to receive the strip 3 and laminate it with at least one other strip 3 of material for the production of the electrical energy storage devices.

According to some non-limiting embodiments not illustrated, the apparatus 4 is only a conveying apparatus, since the strips 3 can be laminated by the lamination unit 5 also seamlessly, being cut subsequently during the production process or not being cut at all and used for the forming of planar windings (known and not further specified) .

In particular, the feeding unit 2 is configured to feed a plurality of strips 3 initially wound in reels 6 along respective feeding paths A and respective advancement directions D.

It is specified that the advancement direction D indicates, in the present description, a direction parallel to the relative feeding path A in every point thereof and substantially extending from the feeding unit 2 to the lamination unit 5.

The feeding unit 2 is configured to feed two strips 3 of electrode E, for example a strip of cathode and a strip of anode, along respective feeding paths A and two strips 3 of separator S along respective feeding paths A. The feeding path A of each strip 3 of electrode E extends from the relative reel 6 to the lamination unit 5, passing through a respective cutting and conveying apparatus 4 adapted to cut the strip 3 of electrode E into subsequent portions, as it will be better explained in the following. The feeding path A of each strip of separator S extends from the respective reel 6 to the lamination unit 5, without passing through any cutting and conveying apparatus 4.

In the case where the subsequent portions are not cut, as previously described, the subsequent portions are to be considered as the electrode portions delimited by the consecutive points where the strip 3 of electrode E is gripped by the gripping assembly 10.

Conveniently, the machine 1 comprises unwinding rollers (not illustrated) configured to support the strips 3 of separator S along the respective feeding paths A.

Preferably, the feeding unit 2 is also configured to feed a strip 3 of protection layer P along a respective feeding path and up to the lamination unit 5, for using the same as protection of at least one of the strips 3 of electrode E, in particular of also one of the strips 3 of separator S during the lamination of the latter. In other words, the strip 3 of protection layer P acts as intermediate layer between at least one layer 3 of electrode E or of separator S and at least one of the lamination rollers (known and not illustrated) of the lamination unit 5. In some non-limiting cases, two protection P layers 3 are present arranged on the outside of the multilayer strip (E/S/E/S) inside the lamination unit 5.

The lamination unit 5 comprises a pair of opposing input rollers 7 configured to receive all of the previously mentioned strips 3. In particular, the feeding paths A of the strips 3 of electrode E, of separator S and of protection layer P converge at the input rollers 7, through which the strips 3 enter the unit 5 for being laminated together by means of the aforementioned lamination rollers, according to a known procedure not specifically described, thus obtaining a multilayer planar strip composed of, in the following order, a continuous strip 3 of protection layer P, a succession of portions of strip 3 of electrode E (i.e. the plates of an electrode, for example the cathode), a continuous strip 3 of separator S, a succession of portions of the other strip 3 of electrode (i.e. the plates of the other electrode, that is the anode), and the other continuous strip 3 of separator S so that the portions of a strip 3 of electrode E (anode) face each other, with a strip 3 of separator S in the middle, at corresponding portions of strip 3 of electrode E (cathode).

Downstream of the lamination unit 5, the multilayer planar strip is cut transversely, in particular between one electrode plate and the other, for obtaining a sequence of cells for enveloped planar batteries separated from each other. Specifically, the cells obtained following the cut subsequent to the lamination are monocells, which comprise two layers of electrode E and two layers of separator S superimposed and alternated according to an electrode-separator-electrode-separator scheme and laminated.

Each cutting and conveying apparatus 4 is configured to prepare the strip 3 of electrode E prior to the feeding thereof to the lamination unit 5.

According to an alternative embodiment not illustrated, the strip 3 prepared by the cutting and conveying apparatus 4 comprises one or more strips 3 of separator S or is composed of a strip of electrode/separator (multilayer) composite material.

The cutting and conveying apparatus 4 comprises a conveying unit 8 configured to advance the strip 3 along the feeding path A in the advancement direction D, a gripping assembly 10 arranged downstream of the conveyor 8 for sequentially gripping the strip 3 at subsequent portions thereof, and a cutting assembly 11 for sequentially cutting the strip 3 when the latter is gripped by the gripping assembly 10 so as to sequentially separate, i.e. singularize, the strip 3 into said subsequent portions. In particular, the feeding unit 2 unwinds the strip 3 from a respective reel 6 and feeds it to the conveying unit 8

Preferably, the conveying unit 8 is composed of a belt conveyor having a fixed or variable geometry, which belts are arranged on opposite sides of the feeding path A and between which the strip 3 transits. The cutting assembly 10 is linearly movable with (intermittent/cyclic) reciprocating motion parallel to the feeding path A. The cutting assembly 11 is integral in motion with the gripping assembly 10, i.e. it too is linearly movable with reciprocating motion integrally with the gripping assembly 10.

Specifically, the cutting assembly 11 comprises a blade 11a and a counter-blade 11b arranged on opposite sides of the feeding path A and adapted to cooperate together for cutting the strip 3 transversely, in particular transverse (perpendicular) to the advancement direction D or to a longitudinal extension of the strip 3, in order to separate each strip portion previously gripped by the gripping assembly 10.

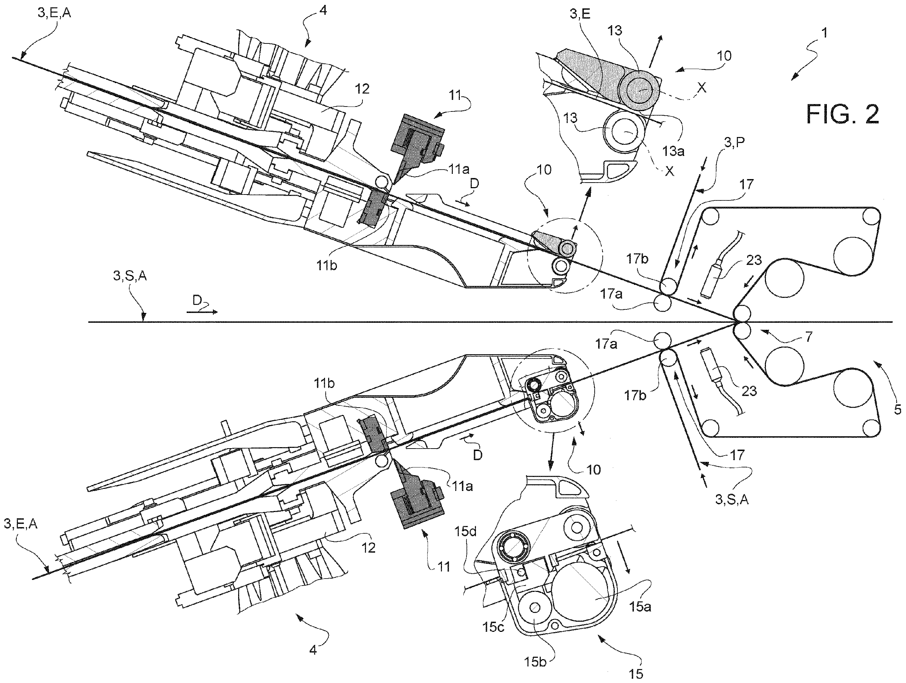

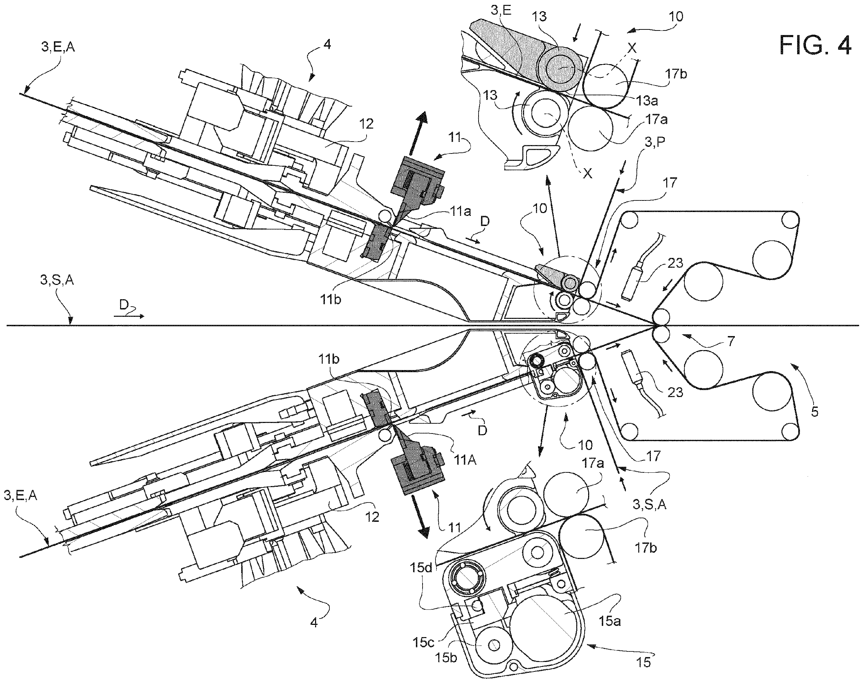

With particular reference to Figures 2 to 4, preferably, the cutting and conveying apparatus 4 comprises a slide 12, which carries the gripping assembly 10 and the cutting assembly 11 and is linearly movable with reciprocating motion between a retracted position (Figure 2) and an advanced position (Figure 4). When the slide 12 is arranged in the retracted position, the gripping assembly 10 is arranged at a first distance from the lamination unit 5, in particular from the input rollers 7, whereas when the slide 12 is arranged in the advanced position, the gripping assembly 10 is arranged at a second distance from the lamination unit 5, in particular from the input rollers 7, less than the first distance.

In order to move the slide 12, and thus the gripping assembly 10 and the cutting member 11, with reciprocating linear motion between the retracted position and the advanced position, the cutting and conveying apparatus 4 comprises an electric linear motor, known per se and thus not illustrated and not specifically described.

The reciprocating linear motion of the slide 12, and thus of the gripping assembly 10 and of the cutting assembly 11, is useful for gripping and cutting the strip 3 at the linear advancement speed of the strip 3 along the feeding path A, so as to prevent undesired tensioning or stretching which could cause breakages of the material and thus require a machine stop. In other words, the linear motor controls the movement of the slide 12 so that the gripping assembly 10 and the cutting assembly 11 reach, for at least part of the displacement of the slide 12 between the retracted position and the advanced position, the linear advancement speed of the strip 3. In particular, the cutting assembly 11 is configured to complete the cut, by opening blade 11a and counter-blade 11b, before the slide 12 starts decelerating, i.e. while the slide 12 is moving at the linear advancement speed of the strip 3.

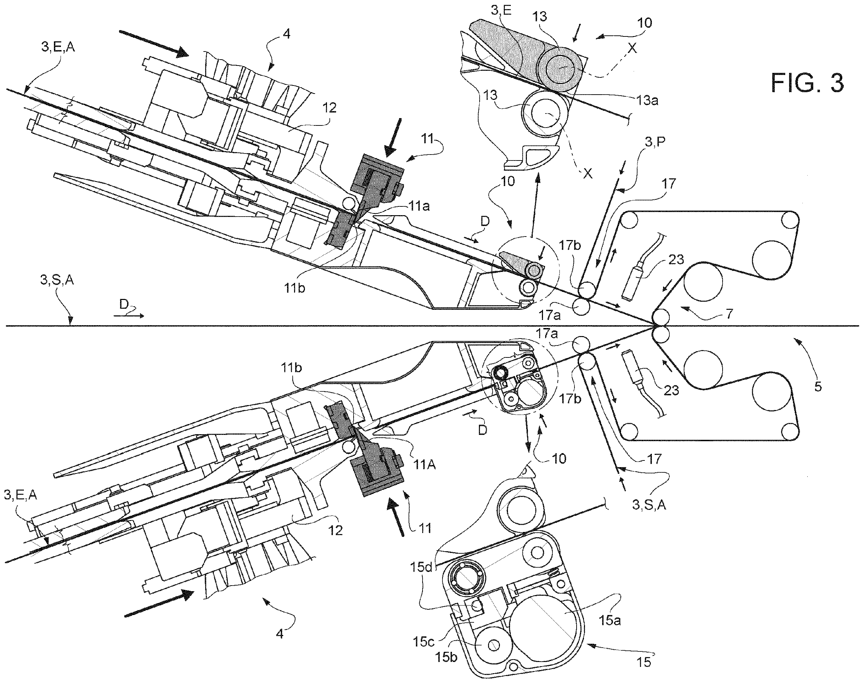

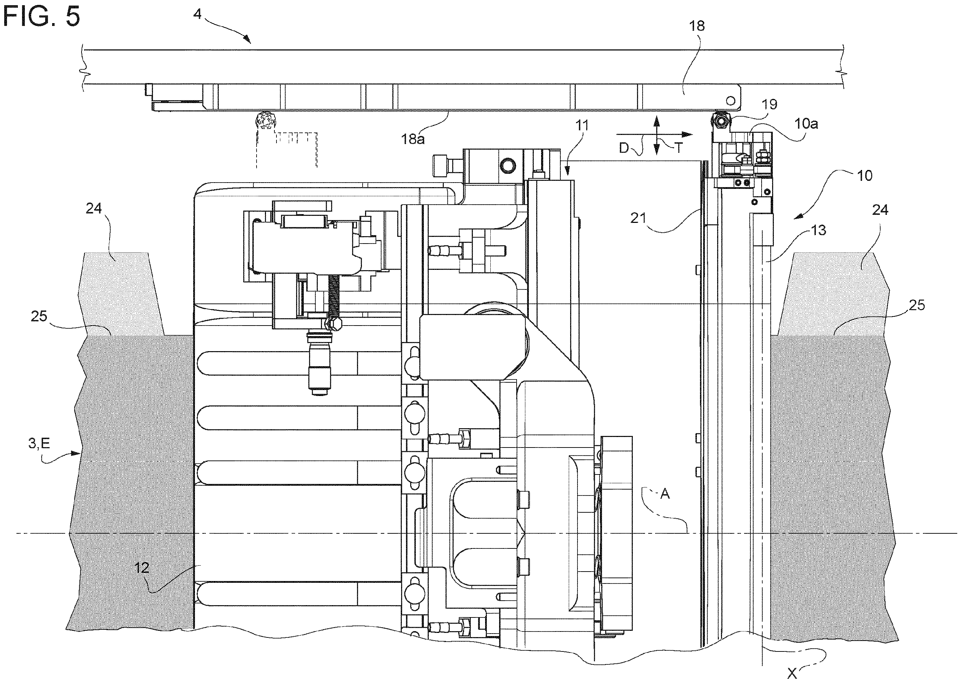

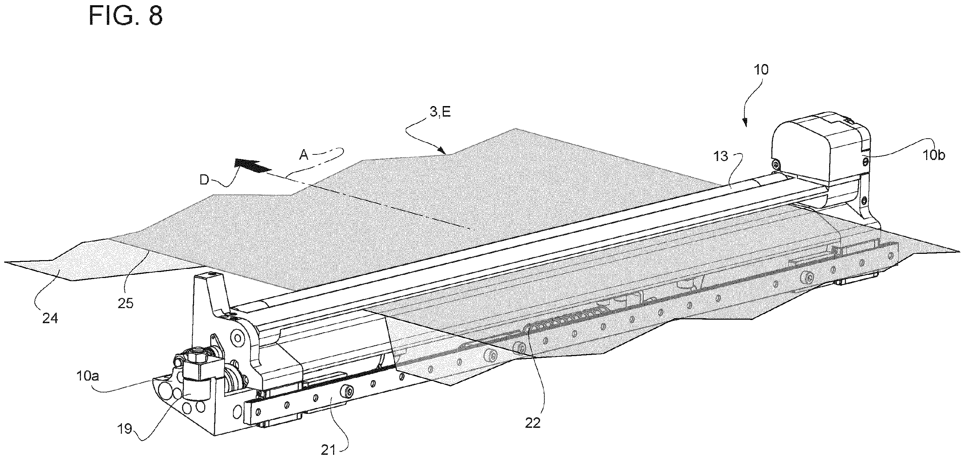

The gripping assembly 10 comprises at least one pair of opposing rollers 13, in particular arranged on opposite sides of the feeding path A, and movable to and from a closed position, in which the two rollers 13 press against each other for gripping the strip 3. In particular, the two rollers 13 are controllable between an open position (Figure 2), in which at least one of the two rollers 13 is spaced from the strip 3, and a closed position (Figures 3 and 4), in which the two rollers 13 press against each other for determining the gripping of the strip 3 between their external longitudinal (cylindrical) surfaces, as is shown also in Figures 5 to 9.

Specifically, the two rollers 13 have respective longitudinal axes X and are mounted on the gripping assembly 10 with the respective axes X parallel to each other and transverse to the advancement direction D, and thus to the feeding path A, so as to transversely grip the strip 3 which slides between them along the feeding path A, as is also shown in Figures 5 to 9.

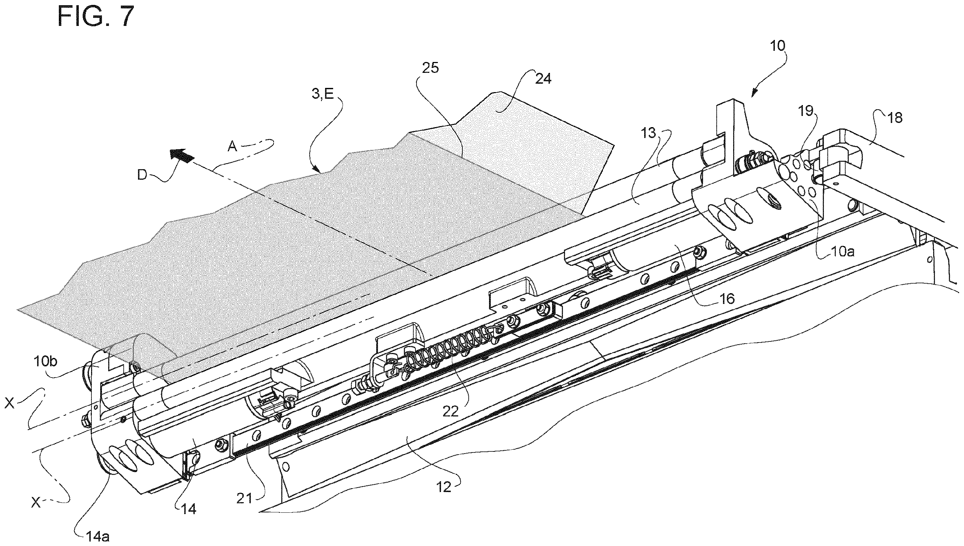

Each gripping assembly 10 comprises an actuator 14 (Figure 7) configured to control a displacement of at least one of the two rollers 13 to and from the other roller 13, thus along a direction transverse to the axes X and to the advancement direction D, for determining, respectively, the open and closed positions of the pair of rollers 13. For example, the actuator 14 is an electric motor, in particular a brushless motor.

With particular reference to Figures 1-4 and 7, each gripping assembly 10 comprises a cam kinematic mechanism 15 for operatively connecting the actuator 14 to the movable roller 13. The kinematic mechanism 15 (Figure 4) comprises a cam 15a, a cam follower 15b, a lever 15c integrally coupled to the cam follower 15b.

In use, the actuator 14 transmits the motion to the cam 15a, preferably by means of a belt 14a (Figures 1 and 7), causing the rotation thereof about its own axis. At a certain rotation angle, the cam 15a cooperates in contact with the cam follower 15b, determining a displacement thereof (leftwards in Figures 3 and 4). Such displacement causes an integral displacement of the lever 15c, which abuts against a fixed pin 15d, determining in such manner the hinged rotation of the movable roller 13 and the consequent drawing close of the latter to the other roller 13. The pair of rollers 13 is thus displaced from the open position (Figure 2) to the closed position for gripping the strip 3 (Figures 3 and 4).

In accordance with embodiments not illustrated, the actuator 14 is arranged at or internally one of the rollers 13.

At least one first roller 13 of the pair of rollers 13 is cyclically actuatable in rotation about its own axis X for controlling an advancement of each strip portion 3, i.e. of each electrode plate of a monocell, previously separated from the strip 3, along the feeding path A in accordance with the advancement direction D. In particular, the rotation of said first roller 13 advances the separated strip portion 3 for feeding it to the lamination unit 5, more precisely to the input rollers 7 of the latter.

For such purpose, each gripping assembly 10 comprises a further actuator 16 (Figure 7) configured to control the aforementioned rotation of the first roller 13 about its own axis X. For example, the actuator 16 is an electric motor, in particular a brushless motor. The actuator 16 is operatively connected to the first roller 13 by means of a kinematic mechanism (not illustrated), for example a gear.

In accordance with embodiments not illustrated, the actuator 16 is arranged at or inside the first roller 15.

In the embodiment illustrated by the figures, the roller 13 actuatable in rotation is the roller 13 proximal to the intermediate strip 3 of separator S, i.e. the one that is interposed between the two strips 3 of electrode E. In accordance with a further embodiment, the roller 13 actuatable in rotation is the roller 13 distal from the intermediate strip 3 of separator S. According to further embodiments, both rollers of the pair of rollers are actuatable in rotation with respective opposite synchronous motions.

Advantageously, the rollers 13 are made of carbon fiber. This configuration is particularly, but not exclusively, advantageous in the case of the production of large-sized batteries, since such material allows manufacturing rollers 13 having a particularly extended axle dimension (i.e. along the axis X) preventing, at the same time, a high elastic arrow of the same during the production.

In use and for each cutting cycle of the single electrode (cathode or anode) from the strip 3 of electrode E, the cutting and conveying apparatus 4 operates in the following manner:
- the electric linear motor controls a displacement of the slide 12 from the retracted position to the advanced position so that the gripping assembly 10 and the cutting assembly 11 reach the advancement speed of the strip 3;
- contextually, the actuator 14 activates the kinematic mechanism 15 that displaces the pair of rollers 13 from the open position to the closed position for gripping a strip portion 3 at the advancement speed of the strip 3;
- then, the cutting assembly 11 transversely cuts the strip 3, at the advancement speed of the latter;
- at this point, while the electric linear motor already controls a deceleration of the slide 12, the first roller 13 is actuated in rotation for advancing the strip portion 3, cut along the feeding path A, towards the lamination unit 5.

The rotation of the first roller 13, or of both rollers 13 in accordance with the other embodiment, is such to compensate for the deceleration of the slide 12 keeping substantially constant the speed of the strip portion 3 just cut along the feeding path A towards the input rollers 7 of the lamination unit 5.

Preferably, the first roller 13 is driven into rotation when the slide 12 is positioned between the retracted position and the advanced position (Figure 3). According to a further embodiment, the first roller 13 is driven into rotation when the slide 12 is in the advanced position.

Thanks to the aforementioned configurations and operating modes, it is possible to limit the amplitude of the reciprocating motion of the slide 12, since it is possible to increase the aforementioned second distance of the slide 12, and thus of the gripping assembly 10, from the input rollers 7 of the lamination unit 5.

In particular, since the strip portion 3 previously separated is cyclically fed to the input rollers 7 by means of the actuation in rotation of the first roller 13, the gripping assembly 10 can be "stopped", in the advanced position, at a greater distance from the input rollers 7 with respect to the case where the gripping assembly 10 does not comprise any roller actuatable in rotation and, therefore, has to feed the strip portion 3 exclusively by means of the movement of the slide 12 from the retracted position to the advanced position. Furthermore, the dynamic of the reciprocating motion of the slide 12 is less sudden since, thanks to the aforementioned compensation put in action by the actuation of the rotation of the first roller 13, it is possible to make the slide 12 decelerate before passing the strip portion 3 to the input rollers 7, thus ensuring a less nervous motion and allowing re-dimensioning (in reduction) the linear motor.

With reference to Figures 1 to 4, advantageously, the machine 1 comprises at least one further pair of opposing rollers 17, in particular one further pair of rollers 17 for each cutting and conveying apparatus 4. Each pair of rollers 17 is arranged downstream of the respective cutting and conveying apparatus 4 and upstream of the lamination unit 5, with respect to the advancement direction D, and is configured to support each strip portion 3 previously separated from the strip 3 of electrode E between the gripping assembly 10 and the lamination unit 5.

Specifically, the rollers 17 are interposed between the gripping assembly 10, i.e. between the rollers 13, and the input rollers 7, with respect to the advancement direction D, and are configured to sequentially receive between them the strip portions 3 previously cut.

Practically, the further pair of rollers 17 allows providing support to each strip portion 3 until in the proximity of the input rollers 7 so as to favor the insertion of such strip portion 3 into the lamination unit 5 providing a suitable support. In such manner, the stroke of the slide 12 can be further reduced, since each strip portion 3 is conveyed to the lamination unit 5 with a suitable support. More precisely, the aforementioned second distance between the gripping assembly 10 in advanced position and the input rollers 7 can be further increased without compromising the nominal feeding of each strip portion 3.

Preferably, the rollers 17 are passive. Specifically, a first roller 17a is dragged into rotation by the strip portion 3, obtained from the separation of the strip 3 of electrode E which transits between the pair of rollers 17, and a second roller 17b is dragged by a further strip 3 of material for the production of storage devices. For example, as is shown in Figures 1 to 4, the second roller 17b is dragged by the strip 3 of separator S or by the strip 3 of protection layer P. In such manner, no motorization of the pair of rollers 17 is necessary and, consequently, it is possible to reduce the number of components of the machine 1 and thus increase the reliability thereof.

The distance between the rollers 17 and the input rollers 7 corresponds to the minimum size processable by the machine 1, since the continuous gripping of the strips 3 by at least one pair of rollers 17 is ensured.

With particular reference to Figures 5 to 9, the gripping assembly 10 is displaceable along a direction T transverse with respect to the advancement direction D of the strip 3. In particular, the cutting and conveying apparatus 4 comprises a cam element 18, composed in particular of a linear guide cam extending parallel to the advancement direction D and movable along the direction T, and the gripping assembly 10 comprises a cam follower element 19, preferably composed of a cam follower roller, which is adapted to cooperate with the cam element 18 so as to make the gripping assembly 10 displaceable along the direction T.

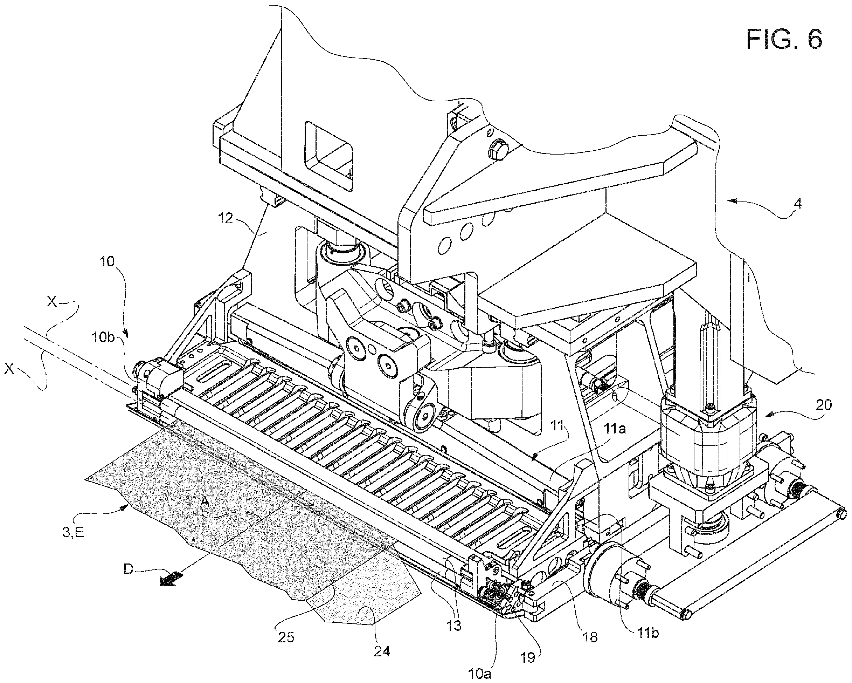

More specifically, the cam element 18 is arranged on the side of the slide 12, and in particular of the gripping assembly 10, with respect to the advancement direction D, whereas the cam follower element 19 is integrally fixed to a first side portion 10a of the gripping assembly 10 opposite a second side portion 10b of the gripping assembly 10 (Figures 6 to 9) at which the cam kinematic mechanism 15 is positioned. The cam follower element 19 is adapted to slide in contact on a surface 18a of the cam element 18, following the reciprocating motion of the slide 12. The cutting and conveying apparatus 4 comprises a further actuator 20 (Figure 6) for moving the cam element 18 along the direction T. In such manner, the displacement of the cam element 18 along the direction T simulates a linear cam and such displacement is "copied" by the cam follower element 19, thus causing the displacement of the gripping assembly 10 in the direction T.

Advantageously, the cutting and conveying apparatus 4 comprises a linear guide 21 parallel to the direction T for fixing the gripping assembly 10 to the slide 12 in a slidable manner. Suitably, the cutting and conveying apparatus 4 comprises elastic means, for example a helical spring 22 interposed between the linear guide 21 and the gripping assembly 10 for pushing the latter towards a determined position along the direction T. In particular, the spring 20 exerts a recall force on the gripping assembly 10 pushing it along the direction T towards the cam element 18, so that the cam follower element 19 pushes against the surface 18a of the cam element 18. In such manner, a constant abutment of the cam follower element 19 against the cam element 18 is ensured during the production process and, therefore, the precision of the transverse movement (along the direction T) of the gripping assembly 10 is ensured.

As it will be specifically explained in the following of the present document, the displacement of the gripping assembly 10 along the direction T is controlled so as to correct any positioning errors of the strip 3 of electrode E (more precisely of the subsequent portions thereof) during the production process.

With reference again to Figures 1 to 4, preferably, each cutting and conveying apparatus 4 comprises a respective sensor 23 arranged downstream of the gripping assembly 10 and thus of the cutting assembly 11, with respect to the advancement direction D, for detecting the position of each separated strip portion 3.

Advantageously but not necessarily, the sensor 23 is arranged upstream of the input rollers 7; in particular the sensor 23 is arranged along the feeding path A of the strip 3 of electrode E, more precisely between the input rollers 7 and the pair of rollers 17.

In the non-limiting embodiment of the accompanying figures, the sensor 23 is arranged between the strip 3 of electrode E and a layer 3 external thereto, in particular of separator S (inferiorly) and/or protective P.

With particular reference to Figures 5 to 9, each strip 3 of electrode E comprises reference elements defining said subsequent portions in which the strip 3 of electrode E is separated. Such reference elements comprise a terminal tab 24 for each of said subsequent portions (in which the strip 3 of electrode E is cut), and/or a side edge 25 of a longitudinal coating of the strip 3 of electrode E (of known type as defined above, comprising active materials, for example graphite powder in the case of the cathode) which mainly leaves the terminal tabs uncovered 24. In particular, the terminal tab 24 corresponds to the electric terminal of an electrode plate of a monocell.

In some non-limiting cases, as those illustrated in the accompanying figures, the terminal tabs 24 project externally (from the rest of the strip 3 of electrode E) with (oblique) transverse edges with respect to the advancement direction D. In other non-limiting cases not illustrated, the terminal tabs 24 project externally (from the rest of the strip 3 of electrode E) with edges perpendicular to the advancement direction D, i.e. parallel to the direction T.

Preferably, the sensor 23 is composed of an optic sensor, for example a camera operating in the visible or the infrared or the ultraviolet spectrum, in particular, but not limitedly, color and/or linear; or of a magnetic-inductive sensor adapted to detect a magnetically active band arranged on each strip portion 3.

The signal produced by the sensor 23 is correlated to the position of the already cut subsequent portions, and in particular to the position of the reference elements 24 and/or 25. In other words, the sensor 23 allows detecting the position of each separated strip portion 3 by locating the relative reference elements 24, 25. For example, in the case of use of a sensor 23 of optic type, the signal provided by the sensor 23 is correlated to the shape of the terminal tab 24 or to an interruption of the side edge 25, both being shape characteristics that allow locating the position of a respective separated strip portion 3.

The machine 1 comprises a control unit (not illustrated) configured to control the position of the cutting assembly 10 along the direction T and/or the rotation speed of the rollers 13 during the advancement of the separated strip portion 3 towards the lamination unit 5, before the relative separated strip portion 3 reaches the input rollers 7, on the basis of the processing of the signals provided by the sensor 23, with the purpose to compensate any alignment errors between the electrode plates of the monocell produced. In particular, the compensation is performed by controlling the actuator 20 and/or the actuator 16, as is better explained in the following.

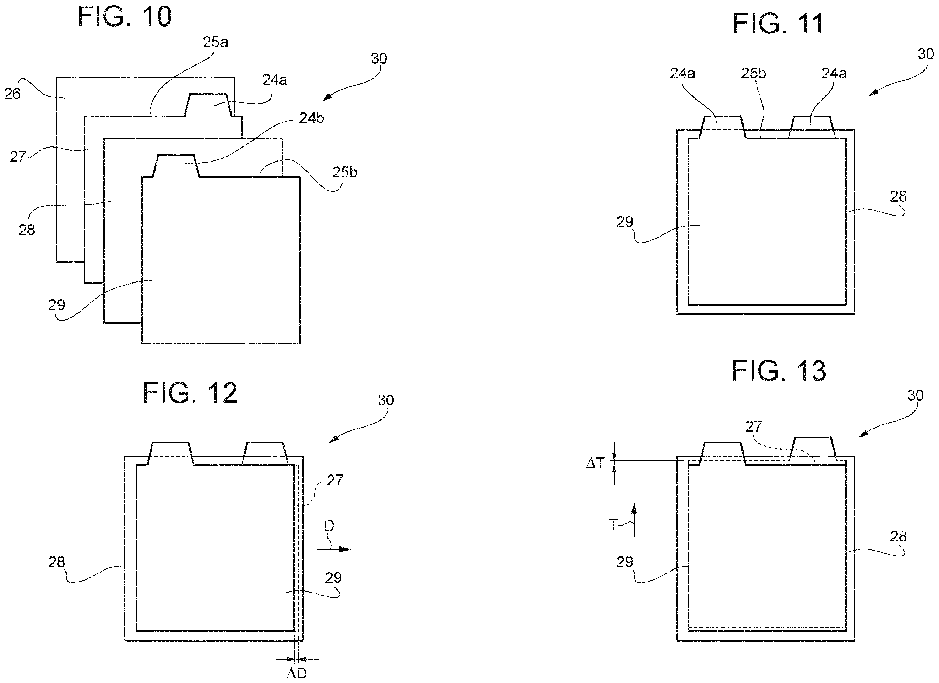

In the non-limiting embodiment of Figure 10, an exploded view illustrates a monocell 30 for a battery obtained from the production process of the previously described machine 1. The monocell 30 comprises, superimposed in the following order, a layer of separator 26 (obtained from the lower strip 3 of separator S, external the electrodes E, of Figures 1 to 4), a first electrode plate 27 (for example the anode, obtained from the intermediate strip 3 of electrode E, internal the separators S, of Figures 1 to 4), another layer of separator 28 (obtained from the upper strip 3 of separator S, internal the electrodes E, of Figures 1 to 4) and a second electrode plate 29 (for example the cathode, obtained from the upper strip 3 of electrode E, external the separators S, of Figures 1 to 4). The two electrode plates 27 and 29 comprise respective terminal tabs 24a and 24b. Furthermore, the electrode plates 27 and 29 have respective side edges 25a and 25b (usually chromatically different with respect to the terminal tabs 24a and 24b). In particular, preferably but not necessarily, the terminal tabs 24a and 24b are respectively made of copper or aluminum and are made in a single block with the metal core of the strip 3 of electrode E, whose central part is provided on both sides with the above-described longitudinal coating. In particular, the side edges 25a and 25b are chromatically different with respect to the terminal tabs 24a and 24b since the same are covered by the coating up to the edges 25a and 25b. Therefore, since the color of the coating is usually dark, in particular black, its profile (also in the case where it does not coincide with the edges 25a, 25b) is particularly perceivable by the sensor 23.

Figure 11 illustrates the monocell 30 as is produced in the assumption of absence of positioning errors of the electrode plates 27 and 29 with respect to a nominal position. Therefore, in Figure 11 only the electrode plate 29 and the layer of separator 28 are visible, as well as both the terminal tabs 24a and 24b.

Whereas, Figures 12 and 13 illustrate the monocell 30 in two situations where the electrode plate 27 has a deviation ΔD along the advancement direction D and, respectively, a deviation ΔT along the direction T, with respect to the nominal position, which in the example of the figures is represented by the position of the electrode plate 29. Specifically, as previously mentioned, such deviations are potentially generated by multiple factors, among which the colored dynamics (i.e. not white signals) intrinsic of the strips 3 (due to, for example, the processing tolerances) which can easily be corrected previously by strip guide systems or the like.

In particular, the control unit is configured to calculate, for each separated strip portion 3, at least one error or deviation between the relative position detected and a nominal position. Said at least one deviation comprises the deviation ΔD, or the deviation ΔT, or both deviations ΔD and ΔT. Therefore, the control unit, for each separated strip portion 3 coming out of the gripping assembly 10 calculates the deviation ΔD and/or the deviation ΔT on the basis of the position detected by the sensor 23 thus giving place to a sequence of deviations ΔD and/or ΔT.

The control unit is configured to implement at least one artificial intelligence algorithm so as to expect possible alignment errors of the separated strip portions 3 and control the actuator 20 and/or the actuator 16 for compensating such errors.

In particular, the control unit is configured to train said at least one artificial intelligence algorithm with a sequence of deviations calculated for a sequence of a certain number N of last separated strip portions 3 and to determine at least one expected deviation for at least one subsequent separated strip portion 3, i.e. the separated strip portion 3 which follows the sequence of the last N separated portions, by means of said at least one artificial intelligence algorithm. By way of example, N is equal to 100. Preferably, N is a number of portions such to cover at least a useful period for making the algorithm reliable.

The expected deviation is thus used to control the position of the gripping assembly 10 along the direction T and/or the rotation speed of said first roller 13 when the pair of rollers 13 is gripping the subsequent separated strip portion 3.

Advantageously, the at least one artificial intelligence algorithm comprises at least one recurrent neural network of known type, preferably an LSTM neural network.

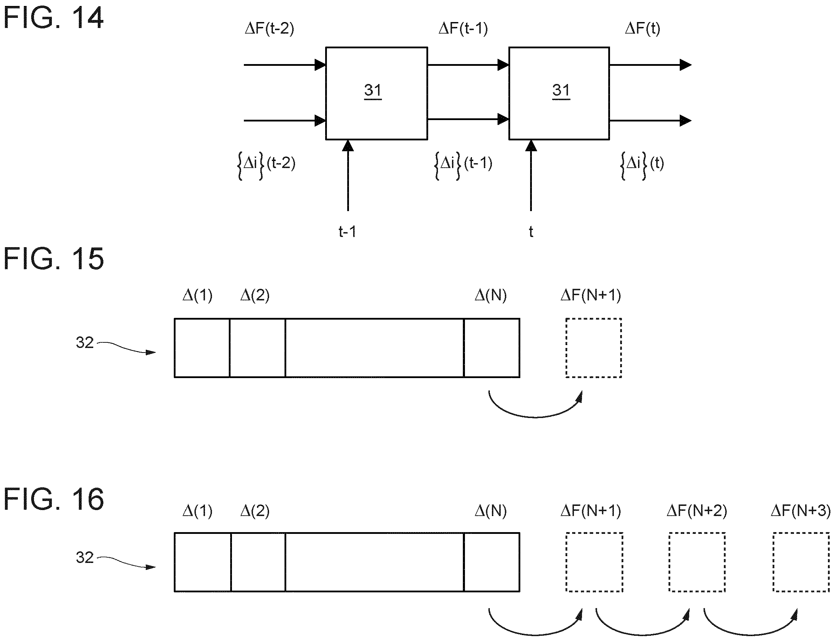

With reference to Figure 14, preferably, the LSTM neural network comprises at least two artificial neurons 31, also more simply known as cells, in cascade connection. The figure illustrates the LSTM neural network in steady-state conditions at a given rating time t. Each cell 31 is trained with a sequence of N previous deviations, i.e. calculated on the basis of the previous N detections of the sensor 23, such sequence of N deviations being indicated by the notation {Δi}, wherein i = 1,...,N, receives in input the previous expected deviation ΔF and provides a new expected deviation ΔF. The sequence of N deviations {Δi} is the long-term memory of the cells 31, whereas the expected deviation ΔF is the short-term memory of the cells 31. The two cells 31 thus process two different expected deviations ΔF(t-1) and ΔF(t-2) and two different sequences of N deviations {Δi}(t-1) and {Δi}(t-2) relative to two consecutive detection cycles of the sensor 23.

The content of each sequence of N deviations {Δi} is saved in a respective shift register 32, only one of which is illustrated in Figure 15. In fact, it should be noted that the three sequences of N deviations {Δi}(t-2), {Δi}(t-1) and {Δi}(t) could differ from each other depending on the updating periodicity of the respective shift registers 32.

The control unit is configured to update the training of said at least one artificial intelligence algorithm, cyclically every number NC of new separated strip portions 3 detected by the sensor 23, adding a number equal to NC of new deviations to the sequence of N deviations {Δi} and eliminating just as many older deviations from the sequence of N deviations {Δi} according to a FIFO logic. Practically, the training of the artificial intelligence algorithm provides, first of all, for updating the shift registers 32 according to the FIFO logic every number NC of detection cycles of the sensor 23.

For example, NC is equal to 1 and thus the training is updated by a value at every detection cycle of the sensor 23, or NC is equal to 3 and thus the training is updated by 3 values every 3 detection cycles. Having NC greater than 1 allows reducing the repetitions of the training and thus the total processing of the artificial intelligence algorithm.

Preferably but not necessarily, since every reel is tendentially different, in microscopic terms, from the other ones, the training of said at least one artificial intelligence algorithm starts from the beginning of the relative reel 6. Therefore, every time a new reel 6 of strip 3 of electrode E is loaded, it is necessary to wait for the cut of a sequence of at least N subsequent portions of strip 3 and the calculation of just as many deviations {Δi} before obtaining the first expected deviation ΔF and thus having a first compensation. Once in steady-state conditions, the training of the artificial intelligence algorithm is cyclically updated in the way described in the foregoing.

In other non-limiting embodiments, the algorithm is already partially trained by the data obtained from the previous reels, in particular of a same batch.

By way of example, in Figure 15, ΔF(N+1) indicates the expected deviation ΔF(t) determined after a sequence of N deviations Δ(1),...,Δ(N) corresponding to the first N subsequent strip portions 3 obtained from the beginning of the reel 6 of strip 3 of electrode E.

The expected deviation which is used by the control unit for controlling the position of the gripping assembly 10 along the direction T and/or the rotation speed of said first roller 13 is the one provided by the last cell 31, with respect to the processing flow of the LSTM network, i.e. the one indicated by ΔF(t) in Figure 14. In other words, by means of the deviation ΔF(t) the position of the gripping assembly 10 at the moment of the passing of the subsequent portions is regularly modified, for each one of which an adjustment is carried out given by the respective expectation ΔF(t). The position of the same portion will be detected only subsequently by the sensor 23, which will compare it to the nominal position and if necessary it will update the relative deviation. In such manner, it is possible to detect the position of the portion of electrode E downstream of the position in which the adjustment of the position is carried out (in the order of mm or of tenths of mm), allowing an improved management of the dimensions.

According to different embodiments, the control unit is configured to use two subsequent expected deviations ΔF(t) and ΔF(t-1) for two subsequent controls, or three subsequent expected deviations ΔF(t), ΔF(t-1) and ΔF(t-2) for three subsequent controls. This allows reducing the overall processing, at the price of a negligible reduction of the precision of the expectation.

By way of example, in Figure 16, ΔF(N+1), ΔF(N+2) and ΔF(N+3) indicate the expected deviations ΔF(t-2), ΔF(t-1) and, respectively, ΔF(t) determined after a sequence of N deviations Δ(1)... Δ(N) corresponding to the first N subsequent strip portions 3 obtained from the beginning of the reel 6 of strip 3 of electrode E.

Advantageously, said at least one artificial intelligence algorithm comprises a first algorithm, which is trained with a sequence of first deviations {ΔTi} calculated along the direction T between the positions detected by the sensor 23 and a first nominal position PTn and is used for determining a first expected deviation ΔTf. The control unit is configured to control the actuator 18 for adjusting the position of the cam element 18, and thus of the gripping assembly 10, along the direction T before controlling the actuator 16 for advancing the subsequent separated strip portion 3 by means of the pair of rollers 13, so as to compensate for the relative expected deviation ΔTf.

The control of the position of the gripping assembly 10 along the direction T has the advantage of compensating for any alignment errors due to imperfections of the reels 6 or of the rollers upstream of the pair of rollers 13.

Advantageously, said at least one artificial intelligence algorithm comprises a second algorithm, which is trained with a sequence of second deviations {ΔDi} calculated along the advancement direction D between the positions detected by the sensor 23 and a second nominal position PDn and is used for determining a second expected deviation ΔDf. The control unit is configured to control the actuator 16 for adjusting the angular velocity of said first roller 13 while the subsequent separated strip portion 3 is advanced by the pair of rollers 13, so as to compensate for the relative expected deviation ΔDf. In particular, the angular velocity of the first roller 13 is momentarily increased for accelerating the subsequent separated strip portion 3 which is delayed with respect to the nominal position PDn that should reach a given instant of time.

The control of the variation of angular velocity of the first roller 13 has the advantage of compensating for possible imperfections in the unwinding of the strip 3 of electrode E by the systems upstream of the pair of rollers 13, and in particular of the feeding unit 2.

According to a further embodiment not illustrated, the cutting assembly 10 does not comprise the pair of rollers 13 and thus each separated strip portion 3 is advanced towards the lamination unit 5 exclusively by means of the motion of the slide 12. The control unit is configured to control the electric linear motor of the slide 12 in the last section of stroke towards the advanced position for adjusting the advancement speed while the subsequent separated strip portion 3 is advanced towards the lamination unit 5. In particular, the speed of the slide 12 is momentarily increased for accelerating the subsequent separated strip portion 3 which is delayed with respect to the nominal position PDn.

It is observed that the control unit implements the first algorithm and the second artificial intelligence algorithm for each cutting and conveying apparatus 4. Therefore, the control unit of the machine 1 of the illustrated example, which comprises two cutting and conveying apparatuses 4, is configured to implement four artificial intelligence algorithms that work independent of each other.

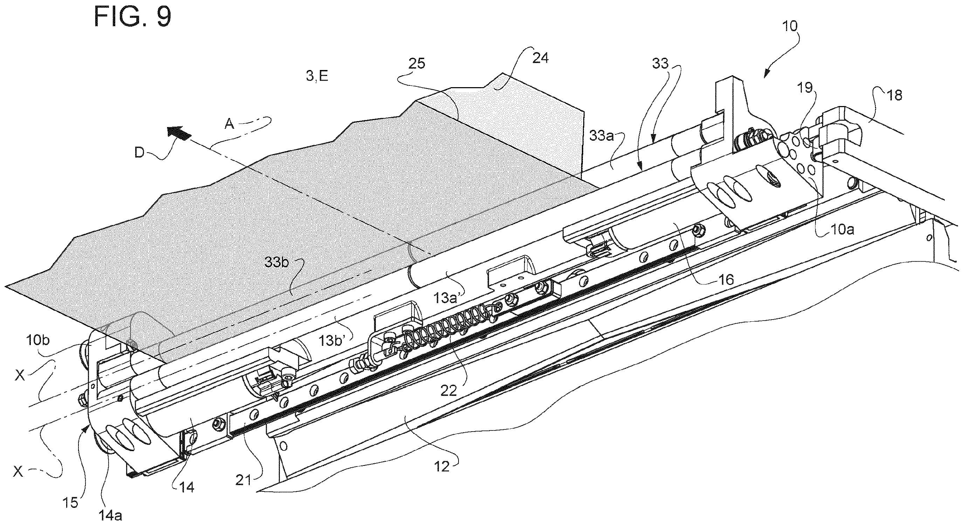

According to a further embodiment of the present invention illustrated in Figure 9, wherein the corresponding elements are indicated by the same reference numerals and letters of Figure 7, the gripping assembly 10 comprises, in the place of the pair of rollers 13 (Figures 5 to 8), a different pair of rollers 33, each of which comprises a pair of half-rollers 33a and 33b adjacent to each other and aligned along a same longitudinal axis X.

The actuator 16 is associated with a first roller 33 of the pair of rollers 33 and comprises two sub-actuators (not illustrated) each adapted to actuate the rotation of a respective half-roller 33a, 33b about the axis X.

According to a further embodiment not illustrated, a first sub-actuator of the actuator 16 is adapted to actuate the rotation of the half-rollers 33a of both rollers 33 and the other sub-actuator is adapted to actuate the rotation of the half-rollers 33b of both rollers 33.

The half-rollers 33a and 33b of each roller 13 are connected to each other by means of a hinge (not illustrated) which decouples the rotative motion thereof. In particular, the hinge is supported by a support element (not illustrated), which allows improving the sturdiness of the gripping assembly 10.

The embodiment of Figure 9 is particularly, but not exclusively, advantageous in the case of the production of large-sized batteries, since the elastic arrow of each roller 33 is reduced during the production.

Furthermore, the control unit is configured to control the rotation speed of the two half-rollers 33a and 33b of a first roller 33 independently of each other for adjusting a yaw of each separated strip portion 3, with respect to the advancement direction D, during the advancement of the same towards the lamination unit 5, on the basis of the processing of the signals provided by the sensor 23, with the purpose of compensating for possible alignment errors between the electrode plates of the monocell, before the relative separated strip portion 3 reaches the input rollers 7. In particular, the compensation is performed by controlling the two sub-actuators of the two half-rollers 33a and 33b as better explained in the following.

In particular, the control unit is configured to calculate, for each separated strip portion 3, an angular deviation ΔR between the relative position detected by the sensor 23 and a nominal angular position PRn defined on an ideal plane containing the separated strip portion 3.

Said at least one artificial intelligence algorithm comprises a third algorithm, which is trained with a sequence of angular deviations {ΔRi} calculated with respect to the nominal angular position ΔRn and is used to determine an expected angular deviation ΔRf. The control unit is configured to control the two sub-actuators of the actuator 16 for adjusting the angular velocities of the two half-rollers 33a and 33b independently of each other while the subsequent separated strip portion 3 is advanced by the pair of rollers 33, so as to perform on said subsequent separated strip portion 3 a yaw so as to compensate for the relative expected angular deviation ΔRf.

It is noted that the control unit implements the third artificial intelligence algorithm for each cutting and conveying apparatus 4. Therefore, the control unit of the machine 1 according to the embodiment of Figure 9, which comprises two cutting and conveying apparatuses 4, is configured to implement six artificial intelligence algorithms that work independently of each other, i.e. two first algorithms for controlling the transverse displacement of the cutting assemblies 10, two second algorithms for controlling the angular velocity of the motorized rollers 33 of the two pair of rollers and two third algorithms for controlling the speeds of the two half-rollers 33a and 33b of each motorized roller 33.

The above-described conveying apparatus 4 embodies in actual fact a method for cutting and conveying an electrode strip for the production of electrical energy storage devices which has the following advantages.

Since the previously cut strip portion 3 is cyclically fed to the input rollers 7 by means of the actuation in rotation of the first roller 13, the gripping assembly 10 can be "stopped" in an advanced position at a greater distance from the input rollers 7 with respect to the case where the gripping assembly 10 does not comprise the roller 13 actuated in rotation and, therefore, has to feed the strip portion 3 exclusively by means of the movement of the slide 12 from the retracted position to the advanced position.

At the same time, the productivity of the machine 1 is increased, since it is capable of producing a wide range of sizes keeping the speed of the strips 3 high. In other words, the braking distance to be ensured between the gripping assembly 10 in advanced position and the lamination unit 5 is reduced, because the gripping assembly 10 is capable of feeding each strip portion 3 to the input rollers 7 from a greater distance, thanks to the first roller 13 actuatable in rotation.

The flexibility of the machine 1 is improved, in the sense that it is possible to produce different sizes of monocells and thus of rechargeable batteries, since it is possible to control the entity of the rotation of the first roller 13 by means of the actuator 16.

Furthermore, the production quality of the machine 1 is remarkably increased, thanks to the use of one or more artificial intelligence algorithms which are trained on the basis of a sequence of deviations between the positions of the electrode strip portions already cut, detected by the sensor 23 between the gripping assembly 10 and the lamination unit 5, and a nominal position for determining one or more expected deviations for a subsequent electrode strip portion to be laminated. The expected deviations are used for controlling the transverse position of the gripping assembly 10 and/or the rotation speed of the first roller 13, 33 of the pair of rollers 13, 33 and/or a yaw of the subsequent electrode strip portion in order to compensate for the expected deviations.

Finally, the apparatus and the method described above allow performing precise compensations for all the deviation signals different from a white noise, thus allowing a very high precision in the superimposition between the electrode plates and reducing the waste, thus increasing, at the same time, the reliability of the automatic machine.

## Claims

1. Method for conveying an electrode strip (3, E) for the production of electrical energy storage devices, the method comprising the steps of:
- conveying the electrode strip (3, E) along a feeding path (A) in a first direction (D);
- gripping the electrode strip (3, E) sequentially at subsequent portions of the same by means of a gripping assembly (10);
- advancing each strip portion towards a lamination unit (5) arranged downstream of the gripping assembly (10);
- detecting the position of each strip portion by means of a sensor (23) arranged downstream of the gripping assembly (10) ;
- for each strip portion, calculating at least one deviation (ΔT, ΔD, ΔR) between the relative position detected and a nominal position (PTn, PDn, PRn);
- training at least one artificial intelligence algorithm with a sequence of deviations ({ΔTi}, {ΔDi}, {ΔRi}) relative to a sequence of a certain first number (N) of last strip portions;
- determining at least one expected deviation (ΔTf, ΔDf, ΔRf) for at least one subsequent strip portion, which is subsequent to the sequence of last strip portions, by means of said at least one artificial intelligence algorithm; and
- controlling the position of the gripping assembly (10) and/or the advancement speed of said at least one subsequent strip portion while the gripping assembly (10) is gripping the subsequent strip portion so as to compensate for said at least one expected deviation (ΔTf, ΔDf, ΔRf).

2. Method according to claim 1 and comprising the further step of sequentially cutting the electrode strip (3, E) while it is gripped by the gripping assembly (10) to separate the electrode strip (3, E) into said subsequent portions.

3. Method according to claim 1 or 2, wherein said at least one artificial intelligence algorithm is a recurrent neural network, in particular LSTM.

4. Method according to any one of claims 1 to 3, wherein the electrode strip (3, E) conveyed along the feeding path (A) is unwound by a respective reel (6); the training of said at least one artificial intelligence algorithm starting from the beginning of the reel (6).

5. Method according to any one of claims 1 to 4, wherein training at least one artificial intelligence algorithm comprises:
- updating the training every a certain second number (NC) of new strip portions detected by the sensor (23), adding the relative new deviations to the deviation sequence ({ΔTi}, {ΔDi}, {ΔRi}) and eliminating a same second number (NC) of older deviations from the deviation sequence ({ΔTi}, {ΔDi}, {ΔRi}) according to a FIFO logic.

6. Method according to any one of claims 1 to 5, wherein said electrode strip (3, E) comprises reference elements (24, 25) defining said subsequent portions; the position of each strip portion being detected by locating the relative reference elements (24, 25) by means of the sensor (23).

7. Method according to claim 6, wherein said reference elements (24, 25) comprise at least one terminal tab (24) for each of said subsequent portions and/or a side edge (25) of an electrode strip coating (3, E).

8. Method according to any one of claims 1 to 7, wherein said at least one artificial intelligence algorithm comprises a first algorithm that is trained with a sequence of first deviations ({ΔTi}) calculated with respect to a first nominal position (PTn) along a second direction (T) transverse to the first direction (D) and said at least one expected deviation comprises a first expected deviation (ΔTf) that is determined by means of the first algorithm; controlling the position of the gripping assembly (10) comprising:
- adjusting the position of the gripping assembly (10) along the second direction (T) before advancing or advancing the subsequent strip portion (3, E) so as to compensate for the relative first expected deviation (ΔTf).

9. Method according to any one of claims 1 to 8, wherein said at least one artificial intelligence algorithm comprises a second algorithm that is trained with a sequence of second deviations ({ΔDi}) calculated with respect to a second nominal position (PDn) along the first direction (D) and said at least one expected deviation comprises a second expected deviation (ΔDf) that is determined by means of the second algorithm; controlling the advancement speed of said at least one subsequent strip portion comprising:
- adjusting the advancement speed while the subsequent strip portion is advanced so as to compensate for the relative second expected deviation (ΔDf).

10. Method according to claim 9, wherein said gripping assembly (10) comprises two rollers (13; 33) arranged on opposite sides of the feeding path (A) and pressed against each other to sequentially grip the electrode strip (3, E) at subsequent portions thereof; advancing each strip portion towards a lamination unit (5) comprising:
- cyclically rotating at least one first roller of the two rollers (13; 33) about its own longitudinal axis (X) of the gripping assembly (10);
adjusting the advancement speed of the subsequent strip portion comprising:
- adjusting the angular velocity of said first roller so as to compensate for the relative second expected deviation (ΔDf).

11. Method according to any one of claims 1 to 9, wherein said gripping assembly (10) comprises two rollers (13; 33) arranged on opposite sides of the feeding path (A) and pressed against each other to sequentially grip the electrode strip (3, E) at subsequent portions thereof, and each of said two rollers (33) comprises a pair of half-rollers (33a, 33b) adjacent to each other and aligned along said longitudinal axis (X); said at least one artificial intelligence algorithm comprising a third algorithm which is trained with a sequence of angular deviations ({ΔRi}) calculated with respect to a nominal angular position (PRn) defined on an ideal plane containing the strip portion and said at least one expected deviation comprises a third expected deviation (ΔRf) which is determined by means of the third algorithm; controlling the position of the gripping assembly (10) comprising:
- adjusting the angular velocities of the two half-rollers (33a, 33b) independently of each other before or while the subsequent strip portion is advanced so as to perform on the latter a yaw so as to compensate for the relative third expected deviation (ΔRf).

12. An automatic machine for producing electrical energy storage devices, comprising at least one apparatus (4) for conveying an electrode strip (3, E), the apparatus (4) comprising:
- a conveying unit (4) for advancing the electrode strip (3, E) along a feeding path (A) in a first direction (D);
- a gripping assembly (10) arranged downstream of the conveying unit (8) for sequentially gripping the electrode strip (3, E) at subsequent portions thereof;
- a first actuator (20) for moving the gripping assembly (10) along a second direction (T) transverse to the first direction (D); and
- a sensor (23) arranged downstream of the gripping assembly (10) to detect the position of each strip portion;
the machine (1) comprising a control unit configured to calculate, for each strip portion, at least one deviation (ΔT, ΔD, ΔR) between the detected position and a nominal position (PTn, PDn, PRn), implementing at least one artificial intelligence algorithm and training it with a sequence of deviations ({ΔTi}, {ΔDi}, {ΔRi}) relative to a sequence of a certain number (N) of last strip portions, determining at least one expected deviation (ΔTf, ΔDf, ΔRf) for at least one subsequent strip portion, which is subsequent to the sequence of last strip portions, by means of said at least one artificial intelligence algorithm, and controlling the first actuator (20) when the gripping assembly (10) has gripped said subsequent strip portion so as to compensate for said at least one expected deviation (ΔTf, ΔDf, ΔRf).

13. Machine according to claim 12 and comprising a cutting assembly (11) for sequentially cutting the electrode strip (3, E) while it is gripped by the gripping assembly (10) so as to separate the electrode strip (3, E) into said subsequent portions.

14. Machine according to claim 13, wherein said at least one artificial intelligence algorithm comprises a first algorithm and said at least one expected deviation comprises a first expected deviation (ΔTf); said control unit being configured to train said first algorithm with a sequence of first deviations ({ΔTi}) calculated with respect to a first nominal position (PTn) along the second direction (T), determine the first expected deviation (ΔTf) by means of said first algorithm, and control the first actuator (20) to adjust the position of the gripping assembly (10) along said second direction (T) so as to compensate for said first expected deviation (ΔTf).

15. Machine according to any one of claims 12 to 14, wherein said gripping assembly (10) comprises two rollers (13; 33), which are arranged on opposite sides of the feeding path (A) and are movable to and from a closed position, wherein the two rollers (13; 33) press against each other to grip the electrode strip (3,E), and a second actuator (16) to cyclically rotate an at least first roller of the two rollers (13; 33) around its own longitudinal axis (X) so as to advance each strip portion, and said control unit is configured to control the first actuator (20) to adjust the position of the gripping assembly (10) along the second direction (T) before or while controlling the second actuator (16) to advance the subsequent strip portion.

16. Machine according to any one of claims 12 to 15, wherein said gripping assembly (10) comprises two rollers (13; 33), which are arranged on opposite sides of the feeding path (A) and are movable to and from a closed position, wherein the two rollers (13; 33) press against each other to grip the electrode strip (3,E), and a second actuator (16) to cyclically rotate at least one first roller of the two rollers (13; 33) about its own longitudinal axis (X) so as to advance each strip portion; said at least one artificial intelligence algorithm comprising a second algorithm and said at least one expected deviation comprising a second expected deviation (ΔDf); said control unit being configured to train the second algorithm with a sequence of second deviations ({ΔDi}) calculated with respect to a second nominal position (PDn) along the first direction (D), determine the second expected deviation (ΔDf) by means of the second algorithm and control the second actuator (16) to advance the subsequent strip portion by adjusting the angular velocity of at least the first of the two rollers (13; 33) so as to compensate for the respective second expected deviation (ΔDf).

17. Machine according to any one of claims 12 to 16, wherein said gripping assembly (10) comprises two rollers (33), which are arranged on opposite sides of the feeding path (A) and are movable to and from a closed position, wherein the two rollers (33) press against each other to grip the electrode strip (3,E), and a second actuator (16) to cyclically rotate at least one first roller of the two rollers (13; 33) about its own longitudinal axis (X) so as to advance each strip portion; each of the two rollers (33) comprising a pair of half-rollers (33a, 33b) adjacent to each other and aligned along said longitudinal axis (X), and said second actuator (16) comprising two third actuators to rotate the respective two half-rollers (33a, 33b); said at least one artificial intelligence algorithm comprising a third algorithm and said at least one expected deviation comprising a third expected deviation (ΔRf); said control unit being configured to train the third algorithm with a sequence of angular deviations ({ΔRi}) calculated with respect to a nominal angular position (PRn) defined on an ideal plane containing the strip portion, determining the third expected deviation (ΔRf) by means of the third algorithm and controlling said third actuators to adjust the angular velocities of the two half-rollers (13; 33) independently of each other so as to perform a yaw on said subsequent strip portion such as to compensate for the relative third expected deviation (ΔRf).

18. Machine according to any one of claims 12 to 17, and comprising a feeding unit (2) for unwinding the electrode strip (3,E) from a respective reel (6) and feeding it to the conveying unit (8); said control unit being configured to start training said at least one artificial intelligence algorithm from the beginning of the reel (6); in particular, the machine comprises two feeding units (2), two electrode strips (3, E), two gripping assemblies (10) and two cutting assemblies (11).

## Patentansprüche

1. Verfahren zum Fördern eines Elektrodenbandes (3, E) für die Herstellung von elektrischen Energiespeichern, wobei das Verfahren die folgenden Schritte aufweist
- Transportieren des Elektrodenbandes (3, E) entlang eines Zuführungsweges (A) in eine erste Richtung (D);
- Ergreifen des Elektrodenbandes (3, E) nacheinander an aufeinanderfolgenden Bandabschnitten desselben mittels einer Greifanordnung (10);
- Vorschieben jedes Bandabschnitts in Richtung einer stromabwärts der Anordnung (10) angeordneten Laminiereinheit (5);
- Erfassen der Position jedes Bandabschnitts mittels eines Sensors (23), der stromabwärts der Greifanordnung (10) angeordnet ist;
- für jeden Bandabschnitt die Berechnung mindestens einer Abweichung (ΔT, ΔD, ΔR) zwischen der erfassten Relativposition und einer Sollposition (PTn, PDn, PRn);
- Trainieren mindestens eines Algorithmus der künstlichen Intelligenz mit einer Folge von Abweichungen ({ΔTi}, {ΔDi}, {ΔRi}) relativ zu einer Folge einer bestimmten ersten Anzahl (N) von letzten Bandabschnitten;
- Bestimmen mindestens einer erwarteten Abweichung (ΔTf, ΔDf, ΔRf) für mindestens einen nachfolgenden Bandabschnitt, der auf die Sequenz der letzten Bandabschnitte folgt, mit Hilfe des mindestens einen Algorithmus der künstlichen Intelligenz; und
- Regeln der Position der Greifanordnung (10) und/oder der Vorschubgeschwindigkeit des mindestens einen nachfolgenden Bandabschnitts, während die Greifanordnung (10) den nachfolgenden Bandabschnitt ergreift, um die mindestens eine erwartete Abweichung (ΔTf, ΔDf, ΔRf) auszugleichen.

2. Verfahren nach Anspruch 1, das den weiteren Schritt aufweist, den Elektrodenstreifen (3, E) sequentiell zu schneiden, während er von der Greifanordnung (10) ergriffen wird, um den Elektrodenstreifen (3, E) in die nachfolgenden Abschnitte zu trennen.

3. Verfahren nach Anspruch 1 oder 2, wobei der mindestens ein Algorithmus der künstlichen Intelligenz ein rekurrentes neuronales Netz, insbesondere LSTM, ist.

4. Verfahren nach einem der Ansprüche 1 bis 3, wobei das entlang des Zuführungsweges (A) geförderte Elektrodenband (3, E) von einer entsprechenden Spule (6) abgewickelt wird; das Training des mindestens einen Algorithmus der künstlichen Intelligenz beginnt am Anfang der Spule (6).

5. Verfahren nach einem der Ansprüche 1 bis 4, wobei das Training mindestens eines Algorithmus der künstlichen Intelligenz aufweisend ist:
- Aktualisieren des Trainings alle eine bestimmte zweite Anzahl (NC) von neuen Bandabschnitten, die von dem Sensor (23) erfasst werden, Hinzufügen der relativen neuen Abweichungen zu der Abweichungssequenz ({ΔTi}, {ΔDi}, {ΔRi}) und Eliminieren einer gleichen zweiten Anzahl (NC) von älteren Abweichungen aus der Abweichungssequenz ({ΔTi}, {ΔDi}, {ΔRi}) gemäß einer FIFO-Logik.

6. Verfahren nach einem der Ansprüche 1 bis 5, wobei der Elektrodenstreifen (3, E) Referenzelemente (24, 25) aufweist, die die aufeinanderfolgenden Abschnitte definieren; wobei die Position jedes Streifenabschnitts durch Lokalisierung der relativen Referenzelemente (24, 25) mit Hilfe des Sensors (23) erfasst wird.

7. Ein Verfahren nach Anspruch 6, wobei die Referenzelemente (24, 25) mindestens eine Anschlusslasche (24) für jeden der nachfolgenden Abschnitte und/oder eine Seitenkante (25) einer Elektrodenbandbeschichtung (3, E) aufweisen.

8. Verfahren nach einem der Ansprüche 1 bis 7, wobei der mindestens eine Algorithmus der künstlichen Intelligenz einen ersten Algorithmus aufweist, der mit einer Folge von ersten Abweichungen ({ΔTi}) trainiert wird, die in Bezug auf eine erste Sollposition (PTn) entlang einer zweiten Richtung (T) quer zur ersten Richtung (D) berechnet werden, und die mindestens eine erwartete Abweichung eine erste erwartete Abweichung (ΔTf) aufweist, die mittels des ersten Algorithmus bestimmt wird; wobei das Regeln der Position der Greifanordnung (10) aufweist:
- Einstellen der Position der Greifanordnung (10) entlang der zweiten Richtung (T) vor dem Vorschub oder dem Vorschub des nachfolgenden Bandabschnitts (3, E), um die relative erste erwartete Abweichung (ΔTf) auszugleichen.

9. Verfahren nach einem der Ansprüche 1 bis 8, wobei das mindestens eine Verfahren der künstlichen Intelligenz einen zweiten Algorithmus aufweist, der mit einer Folge von zweiten Abweichungen ({ΔDi}) trainiert wird, die in Bezug auf eine zweite Sollposition (PDn) entlang der ersten Richtung (D) berechnet werden, und die mindestens eine erwartete Abweichung eine zweite erwartete Abweichung (ΔDf) aufweist, die mittels des zweiten Algorithmus bestimmt wird; das Regeln der Vorschubgeschwindigkeit des mindestens einen nachfolgenden Bandabschnitts betrifft:
- Einstellen der Vorschubgeschwindigkeit, während der nachfolgende Bandabschnitt vorgeschoben wird, um die relative zweite erwartete Abweichung (ΔDf) zu kompensieren.

10. Verfahren nach Anspruch 9, wobei die Greifanordnung (10) zwei Rollen (13; 33) aufweist, die auf gegenüberliegenden Seiten des Vorschubweges (A) angeordnet sind und gegeneinander gedrückt werden, um das Elektrodenband (3, E) an aufeinanderfolgenden Abschnitten desselben nacheinander zu ergreifen; wobei das Vorschieben jedes Bandabschnitts in Richtung einer Laminiereinheit (5) aufweist:
- zyklisches Drehen mindestens einer ersten der beiden Rollen (13; 33) um ihre eigene Längsachse (X) der Greifanordnung (10);
Einstellen der Vorschubgeschwindigkeit des nachfolgenden Bandabschnitts, aufweisend:
- Einstellen der Winkelgeschwindigkeit der genannten ersten Rolle, um die relative zweite erwartete Abweichung (ΔDf) zu kompensieren.

11. Verfahren nach einem der Ansprüche 1 bis 9, wobei die Greifanordnung (10) zwei Rollen (13; 33) aufweist, die auf gegenüberliegenden Seiten des Vorschubweges (A) angeordnet sind und gegeneinander gefluchtet werden, um das Elektrodenband (3, E) an aufeinanderfolgenden Bandabschnitten nacheinander zu ergreifen, und jede der beiden Rollen (33) ein Paar Halbrollen (33a, 33b) aufweist, die nebeneinander liegen und entlang der Längsachse (X) ausgerichtet sind; wobei der mindestens eine Algorithmus der künstlichen Intelligenz einen dritten Algorithmus aufweist, der mit einer Folge von Winkelabweichungen ({ΔRi}) trainiert wird, die in Bezug auf eine nominale Winkelposition (PRn) berechnet werden, die auf einer idealen Ebene definiert ist, die den Bandabschnitt enthält, und wobei die mindestens eine erwartete Abweichung eine dritte erwartete Abweichung (ΔRf) aufweist, die mit Hilfe des dritten Algorithmus bestimmt wird; wobei das Regeln der Position der Greifanordnung (10) aufweist:
- Einstellen der Winkelgeschwindigkeiten der beiden Halbrollen (33a, 33b) unabhängig voneinander vor oder während des Vorschubs des nachfolgenden Bandabschnitts, um an diesem ein Gieren auszuführen, um die relative dritte erwartete Abweichung (ΔRf) auszugleichen.

12. Eine automatische Maschine zur Herstellung von elektrischen Energiespeichern, die mindestens eine Vorrichtung (4) zum Fördern eines Elektrodenbandes (3, E) aufweist, wobei die Vorrichtung (4) aufweist:
- eine Fördereinheit (4) zum Vorwärtsbewegen des Elektrodenstreifens (3, E) entlang eines Zuführungspfades (A) in einer ersten Richtung (D);
- eine stromabwärts der Fördereinheit (8) angeordnete Greifanordnung (10) zum sequentiellen Ergreifen des Elektrodenbandes (3, E) an nachfolgenden Abschnitten davon;
- einen ersten Aktuator (20) zum Bewegen der Greifanordnung (10) entlang einer zweiten Richtung (T) quer zu der ersten Richtung (D); und
- einen Sensor (23), der stromabwärts der Greifanordnung (10) angeordnet ist, um die Position jedes Bandabschnitts zu erfassen;
wobei die Maschine (1) eine Steuereinheit aufweist, die ausgebildet ist, um für jeden Bandabschnitt mindestens eine Abweichung (ΔT, ΔD, ΔR) zwischen der erfassten Position und einer Sollposition (PTn, PDn, PRn) zu berechnen, wobei sie mindestens einen Algorithmus der künstlichen Intelligenz implementiert und ihn mit einer Folge von Abweichungen ({ΔTi}, {ΔDi}, {ΔRi}) in Bezug auf eine Folge einer bestimmten Anzahl (N) der letzten Bandabschnitte trainiert, Bestimmen mindestens einer erwarteten Abweichung (ΔTf, ΔDf, ΔRf) für mindestens einen nachfolgenden Bandabschnitt, der auf die Folge der letzten Bandabschnitte folgt, mittels des mindestens einen Algorithmus der künstlichen Intelligenz, und Steuern des ersten Aktuators (20), wenn die Greifanordnung (10) den nachfolgenden Bandabschnitt ergriffen hat, um die mindestens eine erwartete Abweichung (ΔTf, ΔDf, ΔRf) zu kompensieren.

13. Maschine nach Anspruch 12 und aufweisend eine Baugruppe (11) zum aufeinanderfolgenden Schneiden des Elektrodenbandes (3, E), während es von der Greifanordnung (10) ergriffen wird, um das Elektrodenband (3, E) in die nachfolgenden Abschnitte zu trennen.

14. Maschine nach Anspruch 13, wobei der mindestens eine künstliche Intelligenz-Algorithmus einen ersten Algorithmus aufweist und die mindestens eine erwartete Abweichung eine erste erwartete Abweichung (ΔTf) aufweist; wobei die Steuereinheit ausgebildet ist, um den ersten Algorithmus mit einer Folge von ersten Abweichungen ({ΔTi}) zu trainieren, die in Bezug auf eine erste Sollposition (PTn) entlang der zweiten Richtung (T) berechnet werden, die erste erwartete Abweichung (ΔTf) mittels des ersten Algorithmus zu bestimmen und den ersten Aktuator (20) zu steuern, um die Position der Greifanordnung (10) entlang der zweiten Richtung (T) einzustellen, um die erste erwartete Abweichung (ΔTf) auszugleichen.

15. Maschine nach einem der Ansprüche 12 bis 14, wobei die Greifanordnung (10) zwei Rollen (13; 33) aufweist, die auf gegenüberliegenden Seiten des Vorschubweges (A) angeordnet und in eine geschlossene Position und aus dieser heraus bewegbar sind, wobei die beiden Rollen (13; 33) gegeneinander drücken, um den Elektrodenstreifen (3, E) zu ergreifen, und einen zweiten Aktuator (16) zum zyklischen Drehen einer zumindest ersten Rolle der beiden Rollen (13; 33) zyklisch um ihre eigene Längsachse (X), um jeden Bandabschnitt vorzuschieben, und die Steuereinheit ist ausgebildet, um den ersten Aktuator (20) zu regeln, um die Position der Greifanordnung (10) entlang der zweiten Richtung (T) einzustellen, bevor oder während sie den zweiten Aktuator (16) regelt, um den nachfolgenden Bandabschnitt vorzuschieben.

16. Maschine nach einem der Ansprüche 12 bis 15, wobei die Greifanordnung (10) zwei Rollen (13; 33) aufweist, die auf gegenüberliegenden Seiten des Vorschubweges (A) angeordnet und in eine und aus einer geschlossenen Position bewegbar sind, wobei die beiden Rollen (13; 33) gegeneinander drücken, um den Elektrodenstreifen (3, E) zu greifen, und einen zweiten Aktuator (16) aufweist, um mindestens eine erste Rolle der beiden Rollen (13; 33) zyklisch um ihre eigene Längsachse (X) zu drehen, um jeden Bandabschnitt vorzuschieben; wobei der mindestens eine Algorithmus der künstlichen Intelligenz einen zweiten Algorithmus aufweist und die mindestens eine erwartete Abweichung eine zweite erwartete Abweichung (ΔDf) aufweist; wobei die Steuereinheit ausgebildet ist, um den zweiten Algorithmus mit einer Folge von zweiten Abweichungen ({ΔDi}) zu trainieren, die in Bezug auf eine zweite Sollposition (PDn) entlang der ersten Richtung (D) berechnet werden, die zweite erwartete Abweichung (ΔDf) mittels des zweiten Algorithmus zu bestimmen und den zweiten Aktuator (16) zu steuern, um den nachfolgenden Bandabschnitt durch Einstellen der Winkelgeschwindigkeit von mindestens der ersten der beiden Rollen (13; 33) vorwärts zu bewegen, um die jeweilige zweite erwartete Abweichung (ΔDf) zu kompensieren.

17. Maschine nach einem der Ansprüche 12 bis 16, wobei die Greifanordnung (10) zwei Rollen (33) aufweist, die auf gegenüberliegenden Seiten des Vorschubweges (A) angeordnet und in eine geschlossene Position und aus dieser heraus bewegbar sind, wobei die beiden Rollen (33) gegeneinander drücken, um den Elektrodenstreifen (3, E) zu ergreifen, und einen zweiten Aktuator (16) zum zyklischen Drehen mindestens einer ersten der beiden Rollen (13,33) aufweist, um ihre eigene Längsachse (X) zyklisch zu drehen, um jeden Bandabschnitt vorwärts zu bewegen; wobei jede der beiden Rollen (33) ein Paar Halbrollen (33a, 33b) aufweist, die aneinander angrenzen und entlang der Längsachse (X) miteinander fluchten, und wobei der zweite Aktuator (16) zwei dritte Aktuatoren aufweist, um die jeweiligen zwei Halbrollen (33a, 33b) zu drehen; wobei der mindestens eine Algorithmus der künstlichen Intelligenz einen dritten Algorithmus aufweist und die mindestens eine erwartete Abweichung eine dritte erwartete Abweichung (ΔRf) aufweist; wobei die Steuereinheit ausgebildet ist, um den dritten Algorithmus mit einer Folge von Winkelabweichungen ({ΔRi}) zu trainieren, die in Bezug auf eine nominelle Winkelposition (PRn) berechnet werden, die auf einer idealen Ebene definiert ist, die den Bandabschnitt enthält, wobei die dritte erwartete Abweichung (ΔRf) mittels des dritten Algorithmus bestimmt wird und die dritten Aktuatoren geregelt werden, um die Winkelgeschwindigkeiten der beiden Halbrollen (13; 33) unabhängig voneinander einzustellen, um ein Gieren des nachfolgenden Bandabschnitts durchzuführen, um die relative dritte erwartete Abweichung (ΔRf) auszugleichen.

18. Maschine nach einem der Ansprüche 12 bis 17, die eine Zuführeinheit (2) aufweist, um das Elektrodenband (3, E) von einer entsprechenden Spule (6) abzuwickeln und es der Fördereinheit (8) zuzuführen; wobei die Steuereinheit so ausgebildet ist, dass sie mit dem Training des mindestens einen Algorithmus der künstlichen Intelligenz am Anfang der Spule (6) beginnt; insbesondere weist die Maschine zwei Zuführeinheiten (2), zwei Elektrodenbänder (3, E), zwei Greifanordnungen (10) und zwei Schneidanordnungen (11) auf.

## Revendications

1. Procédé de transport d'une bande d'électrodes (3, E) pour la production de dispositifs de stockage d'énergie électrique, le procédé comprenant les étapes de :
- transport de la bande d'électrodes (3, E) le long d'un trajet d'alimentation (A) dans une première direction (D) ;
- préhension de la bande d'électrodes (3, E) séquentiellement au niveau de parties suivantes de celle-ci au moyen d'un ensemble de préhension (10) ;
- avancement de chaque partie de bande vers une unité de stratification (5) agencée en aval de l'ensemble de préhension (10) ;
- détection de la position de chaque partie de bande au moyen d'un capteur (23) agencé en aval de l'ensemble de préhension (10) ;
- pour chaque partie de bande, calcul d'au moins un écart (ΔT, ΔD, ΔR) entre la position relative détectée et une position nominale (PTn, PDn, PRn) ;
- entraînement d'au moins un algorithme d'intelligence artificielle avec une séquence d'écarts ({ΔTi}, {ΔDi}, {ΔRi}) relative à une séquence d'un certain premier nombre (N) de dernières parties de bande ;
- détermination d'au moins un écart attendu (ΔTf, ΔDf, ΔRf) pour au moins une partie de bande suivante, qui suit la séquence de dernières parties de bande, au moyen dudit au moins un algorithme d'intelligence artificielle ; et
- commande de la position de l'ensemble de préhension (10) et/ou de la vitesse d'avancement de ladite au moins une partie de bande suivante alors que l'ensemble de préhension (10) saisit la partie de bande suivante de sorte à compenser ledit au moins un écart attendu (ΔTf, ΔDf, ΔRf).

2. Procédé selon la revendication 1 et comprenant l'étape supplémentaire consistant à découper séquentiellement la bande d'électrodes (3, E) alors qu'elle est saisie par l'ensemble de préhension (10) pour séparer la bande d'électrodes (3, E) en lesdites parties suivantes.

3. Procédé selon la revendication 1 ou 2, dans lequel ledit au moins un algorithme d'intelligence artificielle est un réseau de neurones récurrents, en particulier LSTM.

4. Procédé selon l'une quelconque des revendications 1 à 3, dans lequel la bande d'électrodes (3, E) transportée le long du trajet d'alimentation (A) est déroulée par une bobine (6) respective ; l'entraînement dudit au moins un algorithme d'intelligence artificielle commençant à partir du début de la bobine (6).

5. Procédé selon l'une quelconque des revendications 1 à 4, dans lequel l'entraînement d'au moins un algorithme d'intelligence artificielle comprend :
- l'actualisation de l'entraînement tous les un certain deuxième nombre (NC) de nouvelles parties de bande détectées par le capteur (23), l'ajout de nouveaux écarts relatifs à la séquence d'écarts ({ΔTi}, {ΔDi}, {ΔRi}) et l'élimination d'un même deuxième nombre (NC) d'écarts plus anciens de la séquence d'écarts ({ΔTi}, {ΔDi}, {ΔRi}) selon une logique FIFO.

6. Procédé selon l'une quelconque des revendications 1 à 5, dans lequel ladite bande d'électrodes (3, E) comprend des éléments de référence (24, 25) définissant lesdites parties suivantes ; la position de chaque partie de bande étant détectée en localisant les éléments de référence (24, 25) relatifs au moyen du capteur (23).

7. Procédé selon la revendication 6, dans lequel lesdits éléments de référence (24, 25) comprennent au moins une languette de borne (24) pour chacune desdites parties suivantes et/ou un bord latéral (25) d'un revêtement de bande d'électrodes (3, E).

8. Procédé selon l'une quelconque des revendications 1 à 7, dans lequel ledit au moins un algorithme d'intelligence artificielle comprend un premier algorithme qui est entraîné avec une séquence de premiers écarts ({ΔTi}) calculés par rapport à une première position nominale (PTn) le long d'une deuxième direction (T) transversale à la première direction (D) et ledit au moins un écart attendu comprend un premier écart attendu (ΔTf) qui est déterminé au moyen du premier algorithme ; la commande de la position de l'ensemble de préhension (10) comprenant :
- l'ajustement de la position de l'ensemble de préhension (10) le long de la deuxième direction (T) avant avancement ou l'avancement de la partie de bande suivante (3, E) de sorte à compenser le premier écart attendu (ΔTf) relatif.

9. Procédé selon l'une quelconque des revendications 1 à 8, dans lequel ledit au moins un algorithme d'intelligence artificielle comprend un deuxième algorithme qui est entraîné avec une séquence de deuxièmes écarts ({ΔDi}) calculés par rapport à une deuxième position nominale (PDn) le long de la première direction (D) et ledit au moins un écart attendu comprend un deuxième écart attendu (ΔDf) qui est déterminé au moyen du deuxième algorithme ; la commande de la vitesse d'avancement de ladite au moins une partie de bande suivante comprenant :
- l'ajustement de la vitesse d'avancement tandis que la partie de bande suivante est avancée de sorte à compenser le deuxième écart attendu (ΔDf) relatif.

10. Procédé selon la revendication 9, dans lequel ledit ensemble de préhension (10) comprend deux rouleaux (13 ; 33) agencés sur des côtés opposés du trajet d'alimentation (A) et pressés l'un contre l'autre pour saisir séquentiellement la bande d'électrodes (3, E) au niveau de parties suivantes de celle-ci ; l'avancement de chaque partie de bande vers une unité de stratification (5) comprenant :
- la rotation cyclique d'au moins un premier rouleau des deux rouleaux (13 ; 33) autour de son propre axe longitudinal (X) de l'ensemble de préhension (10) ;
l'ajustement de la vitesse d'avancement de la partie de bande suivante comprenant :
- l'ajustement de la vitesse angulaire dudit premier rouleau de sorte à compenser le deuxième écart attendu (ΔDf) relatif.

11. Procédé selon l'une quelconque des revendications 1 à 9, dans lequel ledit ensemble de préhension (10) comprend deux rouleaux (13 ; 33) agencés sur des côtés opposés du trajet d'alimentation (A) et pressés l'un contre l'autre pour saisir séquentiellement la bande d'électrodes (3, E) au niveau de parties suivantes de celle-ci, et chacun desdits deux rouleaux (33) comprend une paire de demi-rouleaux (33a, 33b) adjacents l'un à l'autre et alignés le long dudit axe longitudinal (X) ; ledit au moins un algorithme d'intelligence artificielle comprenant un troisième algorithme qui est entraîné avec une séquence d'écarts angulaires ({ΔRi}) calculés par rapport à une position angulaire nominale (PRn) définie sur un plan idéal contenant la partie de bande et ledit au moins un écart attendu comprend un troisième écart attendu (ΔRf) qui est déterminé au moyen du troisième algorithme ; la commande de la position de l'ensemble de préhension (10) comprenant :
- l'ajustement des vitesses angulaires des deux demi-rouleaux (33a, 33b) indépendamment l'une de l'autre avant ou alors que la partie de bande suivante est avancée de sorte à réaliser sur cette dernière un lacet de sorte à compenser le troisième écart attendu (ΔRf) relatif.

12. Machine automatique pour produire des dispositifs de stockage d'énergie électrique, comprenant au moins un appareil (4) pour transporter une bande d'électrodes (3, E), l'appareil (4) comprenant :
- une unité de transport (4) pour faire avancer la bande d'électrodes (3, E) le long d'un trajet d'alimentation (A) dans une première direction (D) ;
- un ensemble de préhension (10) agencé en aval de l'unité de transport (8) pour saisir séquentiellement la bande d'électrodes (3, E) au niveau de parties suivantes de celle-ci ;
- un premier actionneur (20) pour déplacer l'ensemble de préhension (10) le long d'une deuxième direction (T) transversale à la première direction (D) ; et
- un capteur (23) agencé en aval de l'ensemble de préhension (10) pour détecter la position de chaque partie de bande ;
la machine (1) comprenant une unité de commande configurée pour calculer, pour chaque partie de bande, au moins un écart (ΔT, ΔD, ΔR) entre la position détectée et une position nominale (PTn, PDn, PRn), en mettant en oeuvre au moins un algorithme d'intelligence artificielle et en l'entraînant avec une séquence d'écarts ({ΔTi}, {ΔDi}, {ΔRi}) relative à une séquence d'un certain nombre (N) de dernières parties de bande, déterminant au moins un écart attendu (ΔTf, ΔDf, ΔRf) pour au moins une partie de bande suivante, qui suit la séquence de dernières parties de bande, au moyen dudit au moins un algorithme d'intelligence artificielle, et commandant le premier actionneur (20) lorsque l'ensemble de préhension (10) a saisi ladite partie de bande suivante de sorte à compenser ledit au moins un écart attendu (ΔTf, ΔDf, ΔRf).

13. Machine selon la revendication 12 et comprenant un ensemble de découpe (11) pour découper séquentiellement la bande d'électrodes (3, E) alors qu'elle est saisie par l'ensemble de préhension (10) de sorte à séparer la bande d'électrodes (3, E) en lesdites parties suivantes.

14. Machine selon la revendication 13, dans laquelle ledit au moins un algorithme d'intelligence artificielle comprend un premier algorithme et ledit au moins un écart attendu comprend un premier écart attendu (ΔTf) ; ladite unité de commande étant configurée pour entraîner ledit premier algorithme avec une séquence de premiers écarts ({ΔTi}) calculés par rapport à une première position nominale (PTn) le long de la deuxième direction (T), déterminer le premier écart attendu (ΔTf) au moyen dudit premier algorithme, et commander le premier actionneur (20) pour ajuster la position de l'ensemble de préhension (10) le long de ladite deuxième direction (T) de sorte à compenser ledit premier écart attendu (ΔTf).

15. Machine selon l'une quelconque des revendications 12 à 14, dans laquelle ledit ensemble de préhension (10) comprend deux rouleaux (13 ; 33), qui sont agencés sur des côtés opposés du trajet d'alimentation (A) et sont mobiles vers et depuis une position fermée, dans laquelle les deux rouleaux (13 ; 33) se pressent l'un contre l'autre pour saisir la bande d'électrodes (3, E), et un deuxième actionneur (16) pour faire tourner de manière cyclique un au moins premier rouleau des deux rouleaux (13 ; 33) autour de son propre axe longitudinal (X) de sorte à faire avancer chaque partie de bande, et ladite unité de commande est configurée pour commander le premier actionneur (20) pour ajuster la position de l'ensemble de préhension (10) le long de la deuxième direction (T) avant ou lors de la commande du deuxième actionneur (16) pour faire avancer la partie de bande suivante.

16. Machine selon l'une quelconque des revendications 12 à 15, dans laquelle ledit ensemble de préhension (10) comprend deux rouleaux (13 ; 33), qui sont agencés sur des côtés opposés du trajet d'alimentation (A) et sont mobiles vers et depuis une position fermée, dans laquelle les deux rouleaux (13 ; 33) se pressent l'un contre l'autre pour saisir la bande d'électrodes (3, E), et un deuxième actionneur (16) pour faire tourner de manière cyclique au moins un premier rouleau des deux rouleaux (13 ; 33) autour de son propre axe longitudinal (X) de sorte à faire avancer chaque partie de bande ; ledit au moins un algorithme d'intelligence artificielle comprenant un deuxième algorithme et ledit au moins un écart attendu comprenant un deuxième écart attendu (ΔDf) ; ladite unité de commande étant configurée pour entraîner le deuxième algorithme avec une séquence de deuxièmes écarts ({ΔDi}) calculés par rapport à une deuxième position nominale (PDn) le long de la première direction (D), déterminer le deuxième écart attendu (ΔDf) au moyen du deuxième algorithme et commander le deuxième actionneur (16) pour faire avancer la partie de bande suivante en ajustant la vitesse angulaire d'au moins le premier des deux rouleaux (13 ; 33) de sorte à compenser le deuxième écart attendu (ΔDf) respectif.

17. Machine selon l'une quelconque des revendications 12 à 16, dans laquelle ledit ensemble de préhension (10) comprend deux rouleaux (33), qui sont agencés sur des côtés opposés du trajet d'alimentation (A) et sont mobiles vers et depuis une position fermée, dans laquelle les deux rouleaux (33) se pressent l'un contre l'autre pour saisir la bande d'électrodes (3, E), et un deuxième actionneur (16) pour faire tourner de manière cyclique au moins un premier rouleau des deux rouleaux (13 ; 33) autour de son propre axe longitudinal (X) de sorte à faire avancer chaque partie de bande ; chacun des deux rouleaux (33) comprenant une paire de demi-rouleaux (33a, 33b) adjacents l'un à l'autre et alignés le long dudit axe longitudinal (X), et ledit deuxième actionneur (16) comprenant deux troisièmes actionneurs pour faire tourner les deux demi-rouleaux (33a, 33b) respectifs ; ledit au moins un algorithme d'intelligence artificielle comprenant un troisième algorithme et ledit au moins un écart attendu comprenant un troisième écart attendu (ΔRf) ; ladite unité de commande étant configurée pour entraîner le troisième algorithme avec une séquence d'écarts angulaires ({ΔRi}) calculés par rapport à une position angulaire nominale (PRn) définie sur un plan idéal contenant la partie de bande, déterminant le troisième écart attendu (ΔRf) au moyen du troisième algorithme et commandant lesdits troisièmes actionneurs pour ajuster les vitesses angulaires des deux demi-rouleaux (13 ; 33) indépendamment l'une de l'autre de sorte à réaliser un lacet sur ladite partie de bande suivante de sorte à compenser le troisième écart attendu (ΔRf) relatif.

18. Machine selon l'une quelconque des revendications 12 à 17, et comprenant une unité d'alimentation (2) pour dérouler la bande d'électrodes (3, E) d'une bobine (6) respective et l'introduire dans l'unité de transport (8) ; ladite unité de commande étant configurée pour démarrer l'entraînement dudit au moins un algorithme d'intelligence artificielle à partir du début de la bobine (6) ; en particulier, la machine comprend deux unités d'alimentation (2), deux bandes d'électrodes (3, E), deux ensembles de préhension (10) et deux ensembles de découpe (11).
